(19)

Europäisches
Patentamt
European
Patent Office
Office européen
des brevets

(11)  **EP 2 518 878 B1**

(12)  # EUROPEAN PATENT SPECIFICATION

(45) Date of publication and mention
of the grant of the patent:
**17.10.2018  Bulletin 2018/42**

(51) Int Cl.:
***H02M 3/158*** *(2006.01)*

(21) Application number: **12162784.8**

(22) Date of filing: **30.03.2012**

(54)  **DC-DC converter, method for operating the DC-DC converter, environmental energy harvesting system comprising the DC-DC converter, and apparatus comprising the energy harvesting system**

Gleichspannungswandler, Verfahren zum Betrieb des Gleichspannungswandlers, Umweltenergiegewinnungssystem mit dem Gleichspannungswandler und Vorrichtung mit dem System

Convertisseur CC-CC, procédé pour opérer le convertisseur CC-CC, système de collecte d'énergie de l'environnement comprenant le convertisseur CC-CC et dispositif comprenant le système de collecte d'énergie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2011 IT TO20110376**

(43) Date of publication of application:
**31.10.2012 Bulletin 2012/44**

(73) Proprietor: **STMicroelectronics S.r.l.**
**Agrate Brianza (IT)**

(72) Inventors:
- **Gasparini, Alessandro**
  **20092 Cinisello Balsamo (IT)**
- **Ramorini, Stefano**
  **20010 Arluno (IT)**
- **Membretti, Giorgio Massimiliano**
  **20129 Milano (IT)**

(74) Representative: **Cerbaro, Elena et al**
**Studio Torta S.p.A.**
**Via Viotti, 9**
**10121 Torino (IT)**

(56) References cited:
**US-A1- 2006 237 968    US-A1- 2007 159 150
US-A1- 2010 165 686**

- **WING-HUNG KI ET AL: "Single-inductor multiple-output switching converters", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 1, 17 June 2001 (2001-06-17), pages 226-231, XP010559152, DOI: 10.1109/PESC.2001.954024 ISBN: 978-0-7803-7067-8**
- **MA D ET AL: "A PSEUDO-CCM/DCM SIMO SWITCHING CONVERTER WITH FREEWHEEL SWITCHING", IEEE JOURNAL OF SOLID-STATE CIRCUITS, IEEE SERVICE CENTER, PISCATAWAY, NJ, USA, vol. 38, no. 6, 1 June 2003 (2003-06-01), pages 1007-1014, XP001169638, ISSN: 0018-9200, DOI: 10.1109/JSSC.2003.811976**
- **BELLONI M ET AL: "On the design of single-inductor multiple-output DC-DC buck converters", CIRCUITS AND SYSTEMS, 2008. ISCAS 2008. IEEE INTERNATIONAL SYMPOSIUM ON, IEEE, PISCATAWAY, NJ, USA, 18 May 2008 (2008-05-18), pages 3049-3052, XP031392656, ISBN: 978-1-4244-1683-7**

- **DONGWON KWON ET AL:**
  **"Single-Inductor-Multiple-Output Switching**
  **DC-DC Converters", IEEE TRANSACTIONS ON**
  **CIRCUITS AND SYSTEMS II: EXPRESS BRIEFS,**
  **IEEE, US, vol. 56, no. 8, 1 August 2009**
  **(2009-08-01) , pages 614-618, XP011334091,**
  **ISSN: 1549-7747, DOI:**
  **10.1109/TCSII.2009.2025629**

- **DONGWON KWON ET AL:**
  **"Single-Inductor-Multiple-Output Switching**
  **DC-DC Converters", IEEE TRANSACTIONS ON**
  **CIRCUITS AND SYSTEMS II: EXPRESS BRIEFS,**

**Description**

The present invention relates to a DC-DC converter, in particular of a single-inductor multiple-output (SIMO) type. The present invention moreover relates to an environmental energy harvesting system comprising the DC-DC converter, and to an apparatus comprising said environmental energy harvesting system.

As is known, systems for harvesting energy (also known as "energy harvesting systems" or "energy-scavenging systems") from intermittent environmental energy sources (i.e., sources that supply energy in an irregular way) have aroused and continue to arouse considerable interest in a wide range of technological fields. Typically, energy harvesting systems are designed to harvest, store, and transfer energy generated by mechanical sources to a generic load of an electrical type.

Low-frequency vibrations, such as for example mechanical vibrations of disturbance in systems with moving parts can be a valid source of energy. The mechanical energy is converted, by one or more appropriate transducers (for example, piezoelectric or electromagnetic devices) into electrical energy, which can be used for supplying an electrical load. In this way, the electrical load does not require batteries or other supply systems that are cumbersome and poorly resistant to mechanical stresses.

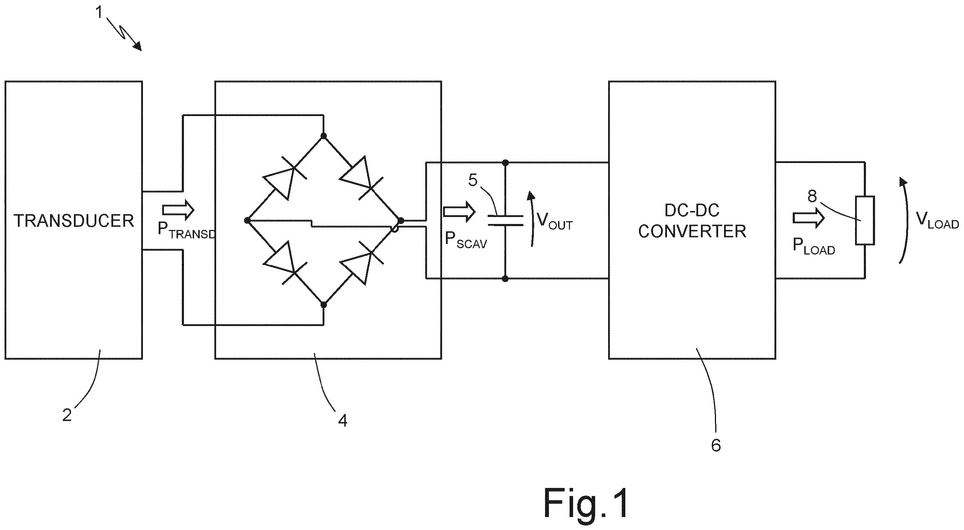

Figure 1 is a schematic illustration, by means of functional blocks, of an energy harvesting system of a known type.

The energy harvesting system 1 of Figure 1 comprises: a transducer 2, for example of an electromagnetic or piezoelectric type, subject during use to environmental mechanical vibrations and configured for converting mechanical energy into electrical energy, typically into AC (alternating current) voltages; a scavenging interface 4, for example comprising a diode-bridge rectifier circuit (also known as Graetz bridge), configured for receiving at input the AC signal generated by the transducer 2 and supplying at output a DC (direct current) signal for charging a capacitor 5 connected to the output of the rectifier circuit 4; and a DC-DC converter 6, connected to the capacitor 5 for receiving at input the electrical energy stored by the capacitor 5 and supplying it to an electrical load 8. The capacitor 5 hence has the function of energy-storage element, energy which is made available, when required, to the electrical load 8 for operation of the latter.

The transducer 2 is, for example, an electrochemical transducer, or an electromechanical transducer, or an electroacoustic transducer, or an electromagnetic transducer, or a photoelectric transducer, or an electrostatic transducer, or a thermoelectrical transducer.

The global efficiency $\eta_{TOT}$ of the energy harvesting system 1 is given by Eq. (1) below

$$\eta_{TOT} = \eta_{TRANSD} \cdot \eta_{SCAV} \cdot \eta_{DCDC} \qquad (1)$$

wherein $\eta_{TRANSD}$ is the efficiency of the transducer 2, indicating the amount of energy available in the environment that has been effectively converted, by the transducer 2, into electrical energy; $\eta_{SCAV}$ is the efficiency of the scavenging interface 4, indicating the energy consumed by the scavenging interface 4 and the factor of impedance decoupling between the transducer and the interface; and $\eta_{DCDC}$ is the efficiency of the DC-DC converter 6.

As is known, in order to supply to the load the maximum power available, the impedance of the load should be equal to that of the source. The transducer 2 can be represented schematically, in this context, as a voltage generator provided with an internal resistance $R_S$ of its own. The maximum power $P_{TRANSD}^{MAX}$ that the transducer 2 can supply at output may be defined as:

$$P_{TRANSD}^{MAX} = V_{TRANSD\_EQ}^{2}/4\ R_S\ \text{if}\ R_{LOAD} = R_S \qquad (2)$$

wherein $V_{TRANSD\_EQ}$ is the voltage produced by the equivalent voltage generator; and $R_{LOAD}$ is the equivalent electrical resistance at the output of the transducer 2 (or, likewise, seen at input to the scavenging interface 4), which takes into due consideration the equivalent resistance of the scavenging interface 4, of the DC-DC converter 6, and of the load 8.

On account of the impedance decoupling ($R_{LOAD} \neq R_S$), the power at input to the scavenging interface 4 is lower than the maximum power available $P_{TRANSD}^{MAX}$.

The power $P_{SCAV}$ stored by the capacitor 5 is a fraction of the power recovered by the interface, and is given by Eq. (3) below

$$P_{SCAV} = \eta_{TRANSD} \cdot \eta_{SCAV} \cdot P_{TRANSD}^{MAX} \qquad (3)$$

whilst the power $P_{EL\_LOAD}$ supplied at output by the DC-DC converter to the electrical load 8 is given by the following Eq. (4)

$$P_{EL\_LOAD} = P_{DCDC} \cdot \eta_{DCDC} \qquad\qquad (4)$$

where $P_{DCDC}$ is the power received at input by the DC-DC converter 8, in this case coinciding with $P_{SCAV}$.

The main disadvantage of the configuration according to Figure 1 regards the fact that the maximum voltage supplied at output from the scavenging interface 4 is limited by the input dynamics of the DC-DC converter 8.

The voltage $V_{OUT}$ across the capacitor 5 (supplied at output from the scavenging interface 4 and at input to the DC-DC converter 8) is in fact determined on the basis of the balancing of power according to the following Eq. (5)

$$P_{STORE} = P_{SCAV} - P_{DCDC} \qquad\qquad (5)$$

In applications where the transducer 2 converts mechanical energy into electrical energy in a discontinuous way (i.e., the power $P_{TRANSD}{}^{MAX}$ varies significantly in time) and/or the power $P_{EL\_LOAD}$ required by the electrical load 8 varies significantly in time, also the voltage $V_{OUT}$ consequently presents a plot that is variable in time.

This causes, for example, a variation of the efficiency factor $\eta_{DCDC}$, which assumes low values at high values of $V_{OUT}$. The maximum value of $V_{OUT}$ is moreover limited by the range of input voltages allowed by the DC-DC converter.

The document "Single-Inductor-Multiple-Output Switching DC-DC Converters" by D. Kwon, in IEEE Transactions on circuits and systems, 8. August 2009" discloses several DC-DC converters topologies with multiple outputs, as well as the documents "A pseudo-CCM/DCM Switching Converter With Freewheel Swichting" by. D. Ma, IEE Journal of solid-state Circuits, 6. June 2003 and the document "On the design of Single-Inductor Multiple -Output DC-DC Buck Converters" by M. Belloni, International Symposium on circuits and Systems 2008. All discloses convertrs are controlled with regard of the current through the single inductor.

The aim of the present invention is to provide a DC-DC converter, a method for operating the DC-DC converter, an energy harvesting system comprising the DC-DC converter, and an apparatus comprising the energy harvesting system that will enable the aforesaid problems and disadvantages to be overcome. In particular, the DC-DC converter according to the present invention enables an efficiency factor $\eta_{DCDC}$ to be kept high even in conditions of light load, for example of less than 1 mW. Moreover, the dynamics of input voltages is maximized.

Consequently, according to the present invention a DC-DC converter, a method for operating the DC-DC converter, an energy harvesting system comprising the DC-DC converter, and an apparatus comprising the energy harvesting system, are provided as defined in the annexed claims.

For a better understanding of the present invention, preferred embodiments thereof are now described, purely by way of nonlimiting example and with reference to the attached plates of drawings, wherein:

- Figure 1 shows an energy harvesting system of a known type;
- Figure 2 is a schematic illustration of a DC-DC converter of a single-inductor multiple-output (SIMO) type;
- Figure 3 shows in greater detail the DC-DC converter of Figure 2;
- Figures 4a-4c show in schematic form a temporal division for supply of electrical loads by means of the DC-DC converter of Figure 2 or Figure 3 according to a time-multiplexing technique;
- Figures 5a and 5b show by way of example steps of charging and complete discharging of the inductor 18 of the DC-DC converter of Figure 2 or Figure 3, according to a discontinuous-conduction mode (DCM);
- Figure 6 shows an embodiment of a driving circuit of a switch designed to couple the inductor of the DC-DC converter of Figure 2 or Figure 3 with an input supply signal source;
- Figures 7a and 7b show control signals of the driving circuit of Figure 6;
- Figure 7c shows the plot of signals internal to the DC-DC comparator of Figure 2 or Figure 3 when it comprises the driving circuit of Figure 6, using the time scale of the signals of Figures 7a and 7b;
- Figure 8 shows a dead-time generator circuit, which can be coupled to the DC-DC converter of Figure 2 or Figure 3;
- Figure 9 shows in greater detail a portion of the dead-time generator circuit of Figure 8;
- Figures 10a-10c show signals for management and control of the dead-time generator circuit of Figures 8 and 9;
- Figure 10d shows the plot of a signal internal to the DC-DC comparator of Figure 2 or Figure 3 when it comprises the dead-time generator circuit of Figure 8, using the time scale of the signals of Figures 10a-10c;
- Figure 11 shows an embodiment of the DC-DC converter comprising circuits for driving switches of the DC-DC converter used during steps of discharge of the inductor;
- Figure 12 shows an embodiment of a switch coupled to the inductor of the DC-DC converter of Figure 11, which can be operated during steps of discharge of the inductor;

- Figure 13 shows an embodiment of the DC-DC converter comprising an adaptive-control circuit configured for managing coupling and decoupling of the inductor to/from a plurality of electrical loads, for supplying the electrical loads;
- Figure 14 shows a circuit designed to co-operate with the adaptive-control circuit of Figure 13 for generation of a time interval for charging the single inductor of the DC-DC converter according to the present invention;
- Figure 15 shows a circuit including the circuit of Figure 14 and designed to generate a clock signal;
- Figures 16a-16f show logic signals internal to the circuit of Figure 15;
- Figure 17 shows steps of a method for operating the DC-DC converter of Figure 13;
- Figure 18 shows an environmental energy harvesting system comprising the DC-DC converter of Figure 13; and
- Figure 19 shows a vehicle comprising the environmental energy harvesting system of Figure 18.

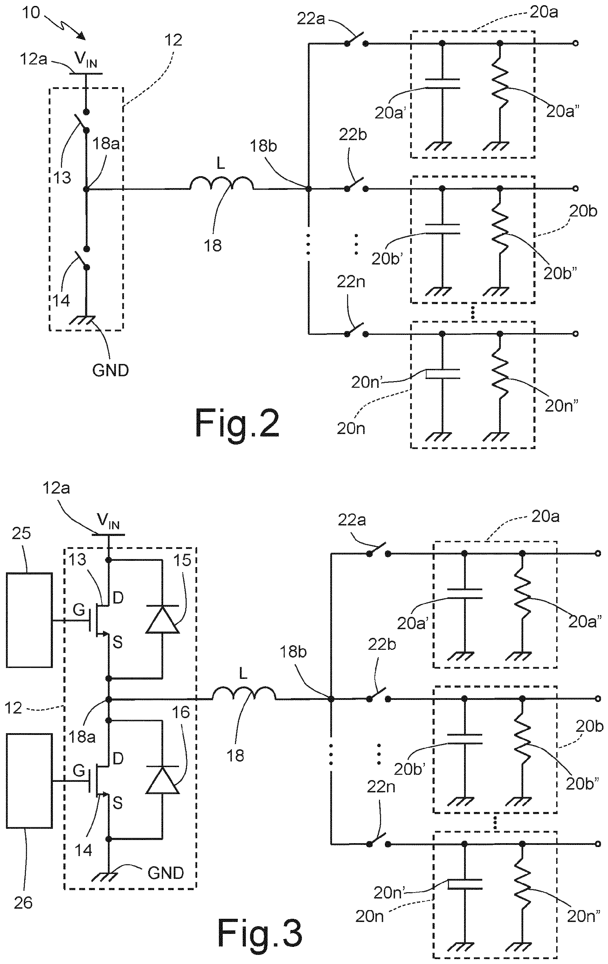

Figure 2 is a schematic illustration of a DC-DC converter 10, in particular of a buck type, comprising a single inductor 18 coupled to the input of the DC-DC converter 10, and a plurality of outputs for supplying a respective plurality of loads 20a-20n, also known as SIMO (single-inductor multiple-output) converter.

In greater detail, the converter 10 comprises a main bridge 12, including a supply terminal 12a at voltage $V_{IN}$ (with $V_{IN}$ ranging, for example, between 1 V and 40 V) and a reference terminal at ground voltage GND (for example, at approximately 0 V, even though other reference voltages can be used, for example $-V_{IN}$). The main bridge 12 moreover includes a high-side switch 13 and a low-side switch 14, connected in series to one another between the supply terminal 12a and the reference terminal GND. In particular, the high-side switch 13 is connected directly to the supply terminal 12a for receiving the signal $V_{IN}$, and the low-side switch 14 is connected directly to the reference terminal GND.

According to one embodiment (see Figure 3), the high-side switch 13 is a MOSFET, in particular an n-channel double-diffusion MOS (DMOS) transistor with resistance in an ON state ($R_{ON}$) of approximately 1 $\Omega$ at 100 mA. The low-side switch 14 is of the same type as the transistor 13. Alternatively, the high-side switch 13 and the low-side switch 14 can be obtained with a different technology; for example, they may be p-channel MOSFETs, or NPN or PNP bipolar transistors, IGBTs, or simply diodes.

With reference to Figure 3, a diode 15 and a diode 16 are connected between a respective source terminal S and a respective drain terminal D of the high-side switch 13 and of the low-side switch 14. The diodes 15 and 16 are connected in antiparallel configuration (with respect to the normal direction of flow of the current through the high-side switch 13 and the low-side switch 14). As is known, a characteristic of a MOSFET is that of displaying, under certain operating conditions, the electrical properties of a diode (parasitic diode). Said diode is electrically set (integrated) between the source and drain terminals of the MOSFET. In other words, the high-side switch 13 and the low-side switch 14 can present the electrical behaviour of a diode, where the cathode of the diode corresponds to the drain terminal and the anode to the source terminal of the respective high-side switch 13 and low-side switch 14 (vice versa, in the case of p-type MOSFETs). In greater detail, the drain terminal D of the high-side switch 13 is connected to the supply terminal 12a, the source terminal S of the high-side switch 13 is connected to the drain terminal of the low-side switch 14, and the source terminal S of the low-side switch 14 is connected to the reference terminal GND. The high-side switch 13 and low-side switch 14 are driven in conduction by means of a respective first driving circuit 25 and second driving circuit 26, which are described more fully hereinafter. The driving circuits 25, 26 are connected to the control terminal or gate terminal G of the transistors that form the high-side switch 13 and low-side switch 14.

With joint reference to Figures 2 and 3, the DC-DC converter 10 further comprises an inductor 18, having an inductance L of between approximately 1 $\mu$H and approximately 20 $\mu$H.

The inductor 18 includes a first conduction terminal 18a connected between the high-side switch 13 and the low-side switch 14 (in particular, connected to the source terminal S and drain terminal D of the high-side switch 13 and of the low-side switch 14, respectively), and a second terminal 18b, connected to a plurality of electrical loads 20a, 20b, ..., 20n by means of a plurality of respective coupling switches 22a, 22b, ..., 22n. Each coupling switch 22a-22n is hence connected in series to the inductor 18.

Each electrical load 20a-20n comprises, for example, a capacitor 20a'-20n' and a resistor 20a"-20b" connected between the second terminal 18b of the inductor 18 and the reference terminal GND.

The coupling switches 22a-22n, as shown in Figures 2 and 3, have the function of enabling a plurality of mutually independent outputs (the plurality of "n" electrical loads 20a-20n) to share the single inductor 18. To guarantee absence of cross conduction between the electrical loads 20a-20n, the coupling switches 22a-22n are controlled (opened/closed) using a time-multiplexing technique.

Each electrical load 20a-20n can require a supply voltage value $V_{out\_a}$, $V_{out\_b}$, ..., $V_{out\_n}$ different from what is required by the other electrical loads 20a-20n. For example, each electrical load 20a-20n can require a supply voltage value $V_{out\_a}$-$V_{out\_n}$ comprised between 0.8 V and 3 V, in any case variable according to the application.

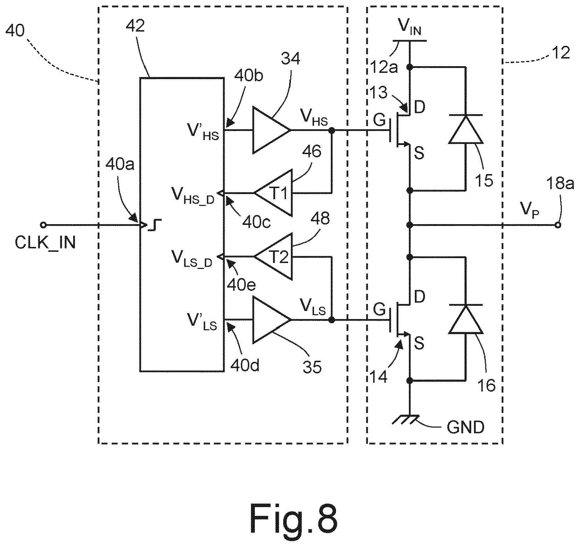

In use, the energy required by the electrical loads 20a-20n for their operation is supplied by the inductor 18, which, in turn, is charged and discharged by controlling appropriately the high-side switch 13 and low-side switch 14 of the main bridge 12. The high-side switch 13 and low-side switch 14 are controlled (opened/closed) in such a way as to prevent a direct connection between the terminal 12a at supply voltage $V_{IN}$ and the ground reference terminal GND. In greater detail, the high-side switch 13 and low-side switch 14 are controlled using a hysteretic voltage control loop, illustrated in Figure 8.

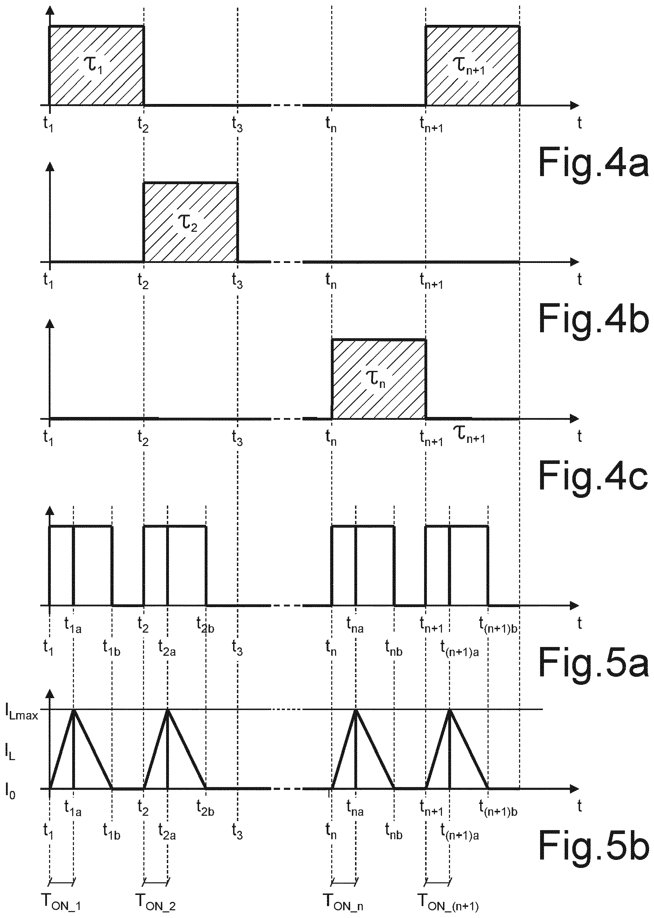

Figures 4a-4c show, using one and the same time scale (axis of the abscissae), a plurality of "n" time intervals $\tau_1$-$\tau_n$ during which the coupling switches 22a-22n are open or closed so as to implement the time-multiplexing control technique.

Figures 5a and 5b show, using the same time scale as that of Figures 4a-4c, a method for controlling the high-side switch 13 and the low-side switch 14 in order to charge and discharge the inductor 18 completely in each time interval $\tau_1$-$\tau_n$ (according to a discontinuous-conduction mode - DCM - or, alternatively, a pseudo-continuous conduction mode - PCCM).

With reference to Figures 4a-4c and 5a, 5b, considering the instant in time $t_1$ as starting instant, the time interval $\tau_1$ is comprised between $t_1$ and $t_2$. During the time interval $\tau_1$, the coupling switch 22a is closed (Figure 4a), and the remaining coupling switches 22b-22n are open (Figures 4b, 4c). Direct connection to one another of two or more electrical loads 20a-20n is thus prevented, consequently preventing phenomena of cross conduction between the electrical loads 20a-20n.

As regards control of the main bridge 12 (Figure 5a), during the time interval $\tau_1$, in particular between $t_1$ and $t_{1a}$, the high-side switch 13 is closed whilst the low-side switch 14 is open; between $t_{1a}$ and $t_{1b}$ the high-side switch 13 is open and the low-side switch 14 is closed. Direct connection of the supply terminal 12a to the reference voltage GND is thus prevented, consequently preventing phenomena of cross conduction between the terminal 12a and the reference terminal GND. As illustrated in Figure 5b, during the interval $t_1$-$t_{1a}$ the charging current $I_L$ of the inductor 18 increases from the initial value $I_0$ (inductor discharged) up to the peak value $I_{Lmax}$, charging the inductor 18. During the interval $t_{1a}$-$t_{1b}$, the inductor 18 is completely discharged, until it reaches again the initial value $I_0$.

Likewise, considering the time interval $\tau_2$ (comprised between $t_2$ and $t_3$), the coupling switch 22b is closed (Figure 4b), and the remaining coupling switches 22a-22n are open (Figures 4a, 4c), preventing cross conduction between the electrical loads 20a-20n.

As regards the main bridge 12 (Figure 5a), during the time interval $\tau_2$ the high-side switch 13 and the low-side switch 14 are controlled in the same way as has been described with reference to the time interval $\tau_1$. Hence, between $t_2$ and $t_{2a}$ the high-side switch 13 is closed and the low-side switch 14 is open; instead, between $t_{2a}$ and $t_{2b}$, the high-side switch 13 is open and the low-side switch 14 is closed. Likewise, during the interval $t_2$-$t_{2a}$ the charging current $I_L$ of the inductor 18 increases from the initial value $I_0$ (assumed at the end of the time interval $\tau_1$) up to the peak value $I_{Lmax}$. During the interval $t_{2a}$-$t_{2b}$, the inductor 18 is completely discharged, until it reaches again the initial value $I_0$.

The process continues for all the "n" switches (i.e., up to the coupling switch 22n) in a similar way, and then restarts in an iterative way.

In conclusion, between $t_1$ and $t_{(n+1)}$, all the electrical loads 20a-20n are supplied in a respective time interval or time slot, preventing phenomena of cross conduction between the electrical loads 20a-20n themselves.

As has been said and as is illustrated in Figure 5b, in each time interval $\tau_1$-$\tau_n$ (and subsequent time intervals $\tau_{(n+1)}$, etc.) the inductor 18 is charged and discharged completely. In detail, the inductor 18 is charged by closing the high-side switch 13, thus coupling the terminal 18a of the inductor 18 to the terminal 12a of the main bridge 12. Discharge of the inductor 18 is obtained by opening the high-side switch 13 and by closing the low-side switch 14. The terminal 18a of the inductor 18 is in this way coupled to the reference terminal GND, and can hence discharge. The steps of charging and complete discharging of the inductor 18 guarantee the absence of a cross regulation between the various electrical loads 20a-20n.

It is evident that the cross regulation can in any case be minimized even if the inductor 18 does not discharge completely, but the current $I_L$ reaches a value close to the starting value $I_0$. A discharge step that is other than accurate enough can, however, cause in time phenomena of divergence of the current stored in the inductor 18, which increases in an undesirable way. It is hence expedient, in any case, to envisage cycles of complete discharge of the inductor 18.

The step of discharge of the inductor 18 must be appropriately monitored in order to prevent the voltage $V_L$ on the inductor 18 from assuming a negative value, causing an absorption of current by the electrical loads 20a-20n when these are coupled to the inductor 18.

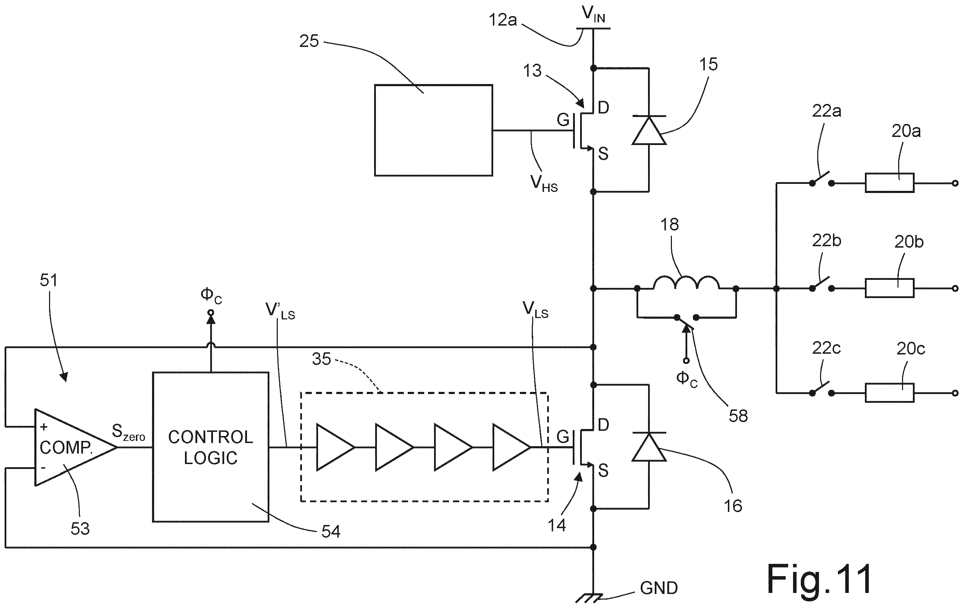

Figure 11, described hereinafter, shows an embodiment of a circuit designed to monitor the current that flows from the inductor 18 to the reference terminal GND in order to prevent phenomena of discharge of the load 20a-20n.

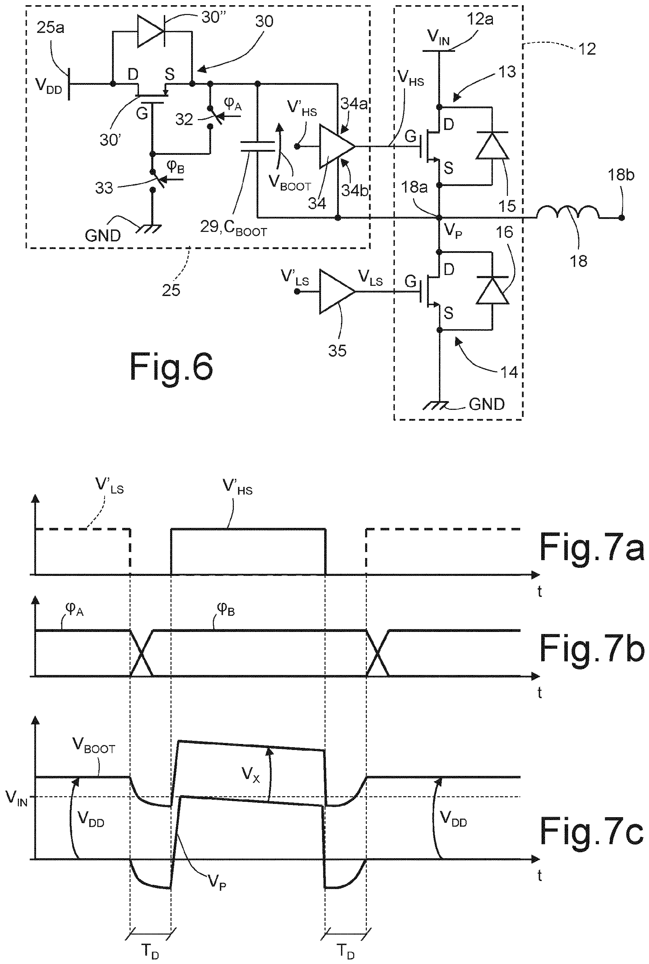

Figure 6 shows the first and second driving circuits 25, 26 connected to the main bridge 12, according to one embodiment of the present invention.

With reference to the high-side switch 13, the first driving circuit 25 coupled thereto is configured for driving the high-side switch 13 alternately into an open state, in which the high-side switch 13 does not conduct current, and into a closed state, in which the high-side switch 13 conducts current. With reference to a high-side switch 13 of an n-channel MOSFET type (as illustrated in Figure 6), the first driving circuit 25 is configured for biasing appropriately the gate terminal G of the high-side switch 13 in such a way that, when it is necessary to close the high-side switch 13, the voltage between the source terminal S and the gate terminal G is higher than the turning-on threshold voltage of the high-side switch 13. For this purpose, the first driving circuit 25 comprises a bootstrap circuit. In detail, the first driving circuit 25 comprises: a supply terminal 25a, at a voltage $V_{DD}$ of between approximately 2 V and approximately 3.3 V, for example approximately 2.5 V; a recharging switch 30 (in particular, illustrated in Figure 6 is a MOSFET 30', of a p type, with an integrated diode 30" having the drain terminal D connected to the supply terminal 25a); and a capacitor 29, having capacitance $C_{BOOT}$ of between approximately 200 pF and approximately 700 pF, for example approximately 400 pF, connected between the source terminal S of the recharging switch 30 and the terminal 18a of the inductor 18. The recharging switch 30 is configured for coupling the capacitor 29 to the supply terminal 25a for charging the capacitor 29 by means of the voltage $V_{DD}$, and, alternately, uncoupling the capacitor 29 from the supply terminal 25a. The first driving circuit 25 moreover comprises further switches 32 and 33. The switch 32 is connected between the source terminal S and the gate terminal G of the recharging switch 30, whilst the switch 33 is connected between the gate terminal G of the recharging switch 30 and the reference terminal GND.

The switches 32 and 33 are, for example, MOSFETs controlled in conduction and inhibition by a respective control signal $\varphi_A$ and $\varphi_B$, applied to the gate terminal of the respective switch 32, 33. The control signals $\varphi_A$ and $\varphi_B$ are generated by a logic external to the first driving circuit 25 so as to implement the steps described with reference to Figures 4a-4c and 5a, 5b.

The high-side switch 13 and the low-side switch 14 have the gate terminal G connected to a respective driving device 34, 35. For example, the first and second driving devices 34, 35 are formed, each, by a chain of "m" inverters, where "m" is an even number.

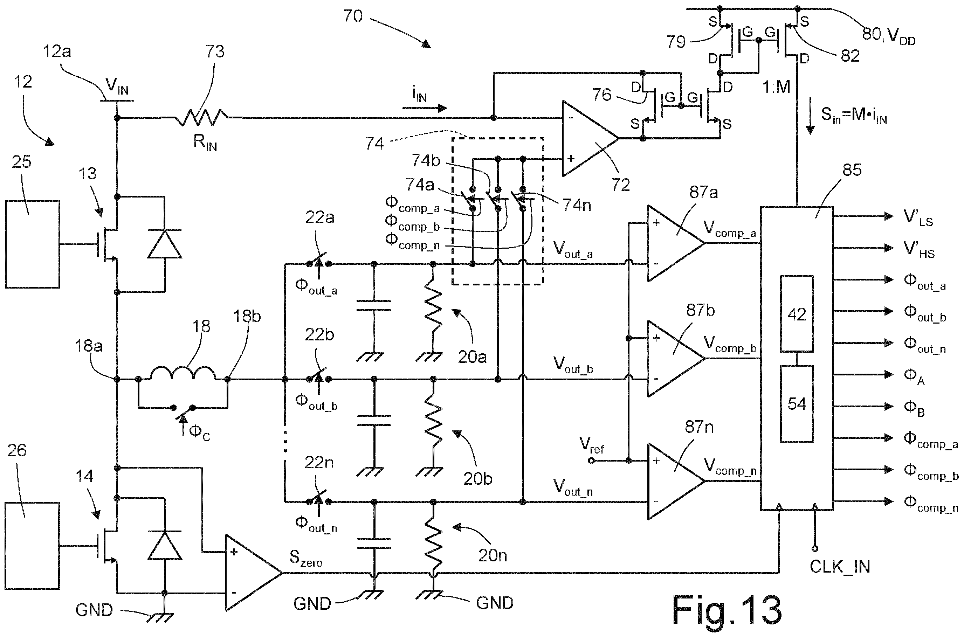

With reference to the driving device 34, the latter comprises a first supply input 34a and a second supply input 34b connected to a floating supply, floating between $V_P$ and $V_{BOOT}$, for generating at output a signal $V_{HS}$ designed to drive (open/close) the high-side transistor 13, on the basis of a signal $V_{HS}$' that it receives at input, generated by an appropriate control logic (control logic 42 and control logic 85, described more fully hereinafter with reference to Figures 8 and 13). Since the driving device 34 is supplied at a voltage of between $V_P$ and $V_{BOOT}$, in use it is able to generate a voltage for driving the gate terminal of the high-side switch 13 higher than the voltage $V_P$ applied to the source terminal S (in particular higher than the turning-on threshold voltage of the high-side switch 13). See, for example, the voltage $V_X$ in Figure 7c.

With reference to the driving device 35, the latter receives at input a signal $V_{LS}$' (which is also generated by the control logic), and generates at output a signal $V_{LS}$ designed to drive (open/close) the low-side transistor 14. Since the low-side transistor 14 has its source terminal S connected to the reference GND, a supply circuit similar to the one described with reference to the driving device 34 that will guarantee voltages on the gate terminal G that are variable as a function of the voltage assumed by the source terminal S is not necessary.

Figure 7a shows, as a function of time t (axis of the abscissae), the plot of the signals $V_{HS}$' and $V_{LS}$' applied, respectively, to the driving device 34 and 35; Figure 7b shows, using the same time scale as that of Figure 7a, the plot of the control signals $\varphi_A$ and $\varphi_B$, designed to control in opening and closing the switches 32 and 33 of Figure 6; and Figure 7c shows, using the same time scale as that of Figures 7a and 7b, the plot of the voltage signal $V_{BOOT}$ and of the voltage signal $V_P$.

When the low-side switch 14 is closed (signal $V_{LS}$' high), the terminal 18a is connected to the ground reference voltage GND, and the signal $V_P$ is hence at reference voltage GND (e.g., approximately 0 V). During this time interval the capacitor 29 is charged by means of the voltage $V_{DD}$. This is made possible by connecting the capacitor 29 to the supply terminal 25a by closing the switch 30 (the switch 33 is closed, and the switch 32 is open). As has already been said, during the time interval in which the low-side switch 14 is closed, the inductor 18 is connected to ground GND and discharges.

When it is necessary to recharge the inductor 18, the switch 30 opens (thus opening the switch 33 and closing the switch 32). Before closing of the high-side switch 13, the low-side switch 14 is opened to prevent phenomena of cross conduction, as has been mentioned previously. The capacitor 29, previously charged, keeps the charge stored and supplies the driving device 34, which, in turn, biases the control terminal of the high-side switch 13, driving it into conduction. The supply terminal 12a is then connected to the terminal 18a of the inductor 18, enabling supply of the electrical load as explained previously.

From Figures 7a and 7b, it may be noted that the signal $V_{LS}$' is at a high value when the control signal $\varphi_A$ is at a high value (switch 32 open) and the signal $V_{HS}$' is at a low value. During this interval, the capacitor 29 is recharged. When the signal $V_{LS}$' drops, also the control signal $\varphi_A$ drops (thus closing the switch 32). At the same time, the control signal $\varphi_B$ rises (thus opening the switch 33). After a certain time interval also the signal $V_{HS}$' rises. Between the falling edge of the signal $V_{LS}$' and the rising edge of the signal $V_{HS}$' there is in fact envisaged a guard range $T_D$ (dead time) to prevent phenomena of cross conduction.

With closing of the high-side switch 13 the voltage $V_P$ rises to the value $V_{IN}$.

In this step, in which the switch 33 is open and the switch 32 is closed, the capacitor 29 is charged ($V_{BOOT} \approx V_{DD}$). With turning-on of the high-side switch 13, the node at voltage $V_P$ increases and, as a result of the (capacitive) bootstrap effect, also the voltage on the opposite plate of the capacitor 29 rises (bootstrap capacitor). The voltage $V_{BOOT}$ across the capacitor 29 is keep substantially constant (but for minor losses, see Eq. (6) given hereinafter). In this way, during the step of turning-on of the high-side switch 13, the driving device 34 is supplied and is hence able to turn on the high-side switch 13.

The voltage drop $V_{BOOT} = V_X$ across the capacitor 29 when the high-side switch 13 is closed is given by

$$V_X = V_{DD}\left(1 - \frac{C_{BOOT}}{C_{BOOT} + C_{GS}}\right) \qquad (6)$$

where $C_{GS}$ is the capacitance between the gate terminal and the source terminal of the high-side transistor 13.

The embodiment of Figure 6 enables minimization of the area required for the ensemble formed by the high-side switch 13 and the first driving circuit 25, maintaining good characteristics of performance as regards the resistance in the ON state ($R_{ON}$) and enabling a complete integration of the first driving circuit 25 and of the high-side switch 13 without the need to use external components.

Figure 8 is a schematic illustration of a dead-time control circuit 40 according to one embodiment of the present invention, coupled to the main bridge 12 of the DC-DC converter 10. The dead-time control logic 40 is configured for generating the signals $V_{HS}$' and $V_{LS}$', previously described.

The dead-time control circuit 40 comprises a control logic 42, configured for generating, on the basis of a clock signal CLK_IN, which receives on a first input (input 40a), the signals $V_{HS}$' and $V_{LS}$'. The signals $V_{HS}$' and $V_{LS}$', as has been said, are supplied to the driving devices 34, 35, which generate at output a respective signal $V_{HS}$ and $V_{LS}$ designed to drive the high-side switch 13 and low-side switch 14.

The dead-time control circuit 40 further comprises a first delay element 46 connected between the output of the driving device 34 and a second input 40c of the control logic 42, and configured for receiving at input the signal $V_{HS}$, delaying it by a time D1, and supplying to the control logic 42 a signal $V_{HS\_D}$ temporally delayed by D1 with respect to the signal $V_{HS}$.

The dead-time control circuit 40 further comprises a second delay element 48 connected between the output of the driving device 35 and a third input 40e of the control logic 42, and configured for receiving at input the signal $V_{LS}$, delaying it by a time D2, and supplying to the control logic 42 a signal $V_{LS\_D}$ temporally delayed by D2 with respect to the signal $V_{LS}$. The first and second delay elements 46, 48 comprise, for example, a chain of inverters, or of other elements designed to generate the desired delay D1 and D2. For example, the delays D1 and D2 are comprised between 5 ns and 20 ns, for example, approximately 10 ns.

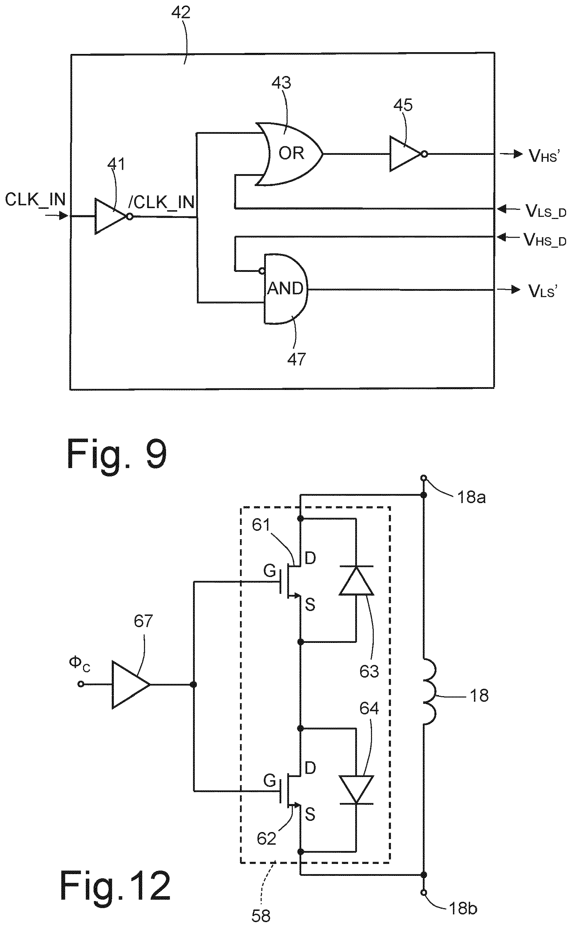

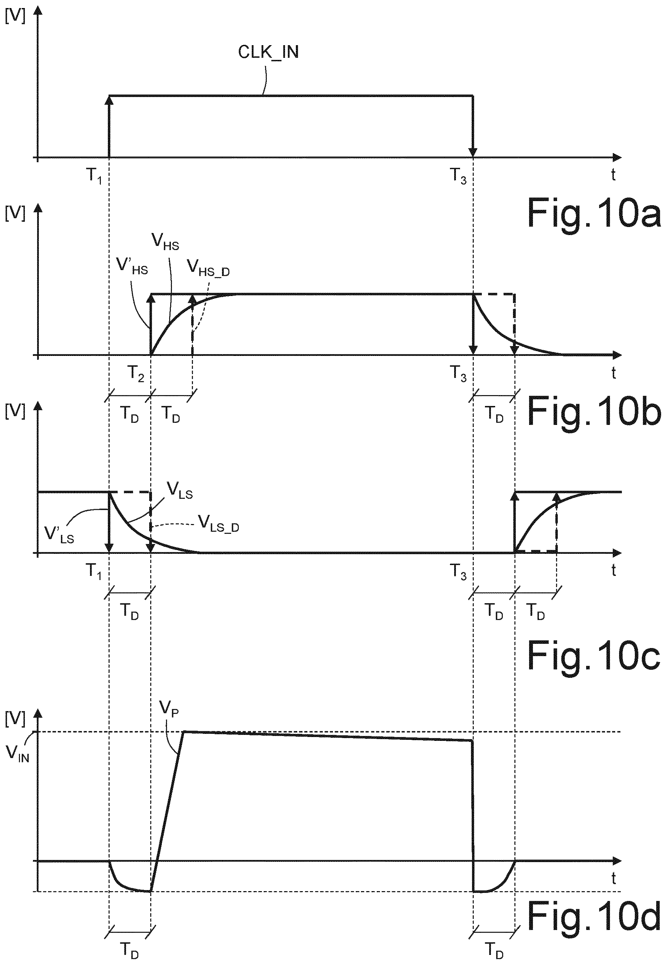

Operation of the control logic 42, for generation of the dead times $T_D$, may be better understood with reference to Figure 9, which shows in greater detail the control logic 42, and to Figures 10a-10d, which are graphic illustrations of the plots of the clock signal CLK_IN (Figure 10a), of the signals $V_{HS}$', $V_{HS}$, and $V_{HS\_D}$ (Figure 10b), of the signals $V_{LS}$', $V_{LS}$, and $V_{LS\_D}$ (Figure 10c), with reference to the voltage signal $V_P$ on the terminal 18a of the inductor 18 (Figure 10d).

The control logic 42 comprises: an inverter 41, which is connected to the input 40a for receiving the clock signal CLK_IN and generates at output a negated clock signal /CLK_IN; an OR logic gate 43, configured for receiving at input the negated clock signal /CLK_IN and the delayed signal $V_{LS\_D}$; an inverter 45, connected to the output of the OR logic gate 43, and generating the signal $V_{HS}$'; and an AND logic gate 47, configured for receiving at input the negated clock signal /CLK_IN and the delayed signal $V_{HS\_D}$ and generating at output the signal $V_{LS}$'.

With reference to Figures 10a and 10c, at a time T1 the clock signal CLK_IN passes from the low value to the high value. The rising edge of the clock signal CLK_IN indicates the start of the operating steps of the DC-DC converter 10, with control of opening of the low-side switch 14 (in the case where the latter is already open, it is kept open). Fin the sequel of the operations of the DC-DC converter 10, the steps of opening of the low-side switch 14 are not synchronous with subsequent rising edges of the clock signal CLK_IN, but are forced by the control logic 54 (Figure 11) on the basis of a signal $S_{zero}$ generated by the comparator 53 (see also in this case Figure 11) .

To return to Figures 10a-10d, at the rising edge of the clock signal CLK_IN, the control logic 42 controls the low-side switch 14 in opening, governing a change of state of the signal $V_{LS}$', which passes from the high value to the low value (or is kept at a low value in the case where the initial state is the low state). Consequently, the driving device 35 generates the signal $V_{LS}$. After the interval $T_D$ (dead time), in particular $T_D = D2$, the control logic 42 receives at input the signal $V_{LS\_D}$. This fact brings about (time T2) the change of state of the signal $V_{HS}$', which passes from the low value to the high value. Consequently, the driving device 34 generates the signal $V_{HS}$ for controlling the high-side switch 13 in closing. On account of the delay with which the signal $V_{HS}$ is brought at input to the control logic 42, the latter receives the signal $V_{HS\_D}$ after a delay $T_D = T1$. However, this information can be rejected.

At time T3, the clock signal CLK_IN changes state, passing from the high state to the low state. This brings about a corresponding change of state of the signal $V_{HS}$'. Consequently, the driving device 34 controls the high-side switch 13 in opening (the signal $V_{HS}$ drops to the low value). The control logic 42 comes to know the change of state of the signal $V_{HS}$ (or, likewise, of the signal $V_{HS}$') after a certain delay, at time T3 + $T_D$. At this instant, the signal $V_{LS}$' is again controlled in such a way as to turn on the low-side switch 14, and the process resumes. As may be noted, at each half-period of the clock signal CLK_IN there is a switching of the high-side switch 13 and low-side switch 14, always guaranteeing the presence of a dead time $T_D$ to prevent cross conduction between the high-voltage terminal (terminal 12a) and the reference terminal GND.

During the half-period of the clock signal CLK_IN in which the high-side switch 13 is closed and the low-side switch 14 is open (i.e., between T2 and T3), the voltage $V_P$ increases, and the inductor 18 is charged. Instead, in the subsequent half-period, when the low-side switch 14 is closed, the inductor 18 is completely discharged. In order to discharge the inductor 18, it is necessary to apply thereto a voltage of a value opposite to the charging voltage. It is possible to do this in a passive way by exploiting the body diode integrated in a MOSFET, or in an active way using the same transistor as switch. In particular, according to one embodiment of the present invention, the low-side switch 14 is exploited.

In order to discharge the inductor 18 in an active way, the low-side switch 14 is driven appropriately, as described in what follows with reference to Figure 11.

When the peak limit value of current $I_{Lmax}$ is reached (see, for example, Figure 5b), after the dead time $T_D$, managed as described with reference to Figures 8 and 10a-10d, the low-side switch 14 is closed, thus connecting the terminal 18a to the ground reference terminal GND, hence enabling the inductor 18 to discharge. When the current that flows in the branch of the low-side switch 14 reaches a lower limit value (for example approximately 0 A), the low-side switch 14 is opens, thus interrupting the connection between the terminal 18a and the ground reference terminal GND.

This guarantees that the current in the inductor 18 does not become negative, which could cause a discharge of the electrical loads 20a-20n, with consequent decrease in the global efficiency. The current that flows in the branch of the low-side switch 14 is monitored by means of a current detector 51, for example comprising a comparator 53 having its non-inverting and inverting inputs connected to opposite conduction terminals of the low-side switch 14 (in particular, the non-inverting input connected to the drain terminal D and the inverting input connected to the source terminal S, or, likewise, the non-inverting input connected to the terminal 18a of the inductor 18 and the inverting input connected to the ground reference terminal GND). A control logic 54 receives the signal $S_{zero}$ generated at output by the comparator 53 and, on the basis of the signal $S_{zero}$ thus received, controls the low-side switch 14 in opening or closing, via the driving device 35 (here represented schematically, by way of example, as a chain of inverters).

The DC-DC converter according to the present invention further comprises an anti-oscillation switch 58, connected in parallel to the inductor 18, as illustrated in Figure 11. The anti-oscillation switch 58 is controlled in opening/closing by the control logic 54, via the signal $\Phi_C$. In particular, when the current detected by the current detector 51 reaches the lower-limit value, the control logic 54 governs the low-side switch 14 in opening and the anti-oscillation switch 58 in closing. In this way, any spurious phase oscillations at the terminal 18a, caused by residual energy stored in the inductor 18 and in the parasitic capacitor associated to the terminals 18a and 18b, are prevented. In fact, any possible undesirable oscillations can cause problems of an electromagnetic nature, and consequent reduction of the global efficiency of the DC-DC converter.

Figure 12 shows in greater detail an embodiment of the anti-oscillation switch 58. The anti-oscillation switch 58 comprises two transistors 61, 62, for example MOSFETs of an n type, connected in "back-to-back" configuration, between the terminal 18a and the terminal 18b of the inductor 18. Illustrated in antiparallel connection with each transistor 61, 62 is a respective diode 63, 64 (diode integrated in the respective transistor 61, 62).

In greater detail, the transistor 61 comprises a drain terminal D connected to the terminal 18a of the inductor 18, the transistor 62 comprises a drain terminal D connected to the terminal 18b of the inductor 18, whilst the source terminals S of the transistor 61 and of the transistor 62 are connected to one another. The control terminals G of the transistors 61 and 62 are, for example, coupled to a driving device 67, designed to receive at input the signal $\Phi_C$ and control the transistors 61 and 62 in opening/closing, on the basis of the signal $\Phi_C$. The driving device 67 comprises, for example, a plurality of inverters cascaded to one another.

In use, when it is necessary to discharge the residual energy of the inductor 18, the anti-oscillation switch 58 is closed, thus driving in conduction both of the transistors 61 and 62. At the end of the step of discharge of the inductor 18, if one of the electrical loads 20a-20n must be recharged, the anti-oscillation switch 58 is opened, thus driving in inhibition both of the transistors 61 and 62 before closing the high-side switch 13.

As described previously, sharing of a single inductor between a plurality of electrical loads 20a-20n is made possible by the presence of the coupling switches 22a-22n, each of which is coupled to a respective electrical load 20a-20n and is configured for supplying the corresponding electrical load 20a-20n according to a time-multiplexing methodology and in a discontinuous mode DCM (for each electrical load 20a-20n, the inductor 18 is charged and discharged completely to a zero current value). The coupling switches 22a-22n are controlled by means of appropriate signals, in respective non-overlapping time intervals (see Figures 4a-4c). Each electrical load 20a-20n is supplied, if necessary, in a respective time slot $\tau_1$-$\tau_n$. A voltage hysteretic comparator verifies whether the respective electrical load 20a-20n needs to be supplied, and, if so, generates the respective supply time slot $\tau_1$-$\tau_n$ and closes the respective coupling switch 22a-22n.

When an electrical load 20a-20n needs to be supplied (e.g., the output voltage of the DC-DC comparator 10 for that particular electrical load 20a-20n is lower than a given threshold), the main bridge 12 is controlled as described previously in order to charge the inductor 18. Hence, the respective coupling switch 22a-22n is closed, thus connecting the inductor 18 to the respective electrical load 20a-20n. Since control of the coupling switches 22a-22n is carried out in time-multiplexing, these steps are carried out in each time slot $\tau_1$-$\tau_n$ envisaged for supplying the respective electrical load 20a-20n.

However, the operation of charge and discharge of the inductor 18, in order to supply the electrical load 20a-20n, is carried out only if the corresponding electrical load 20a-20n needs to be supplied. Otherwise, no operation is carried out until one of the outputs needs to be recharged; only if this condition is verified are the time slots generated. In this way, the energy consumption is minimized, enabling high values of efficiency to be achieved.

Figure 13 shows the DC-DC converter 10 according to the present invention comprising an adaptive-control circuit 70 configured for managing closing and opening of the high-side switch 13 and low-side switch 14 of the main bridge 12.

The adaptive-control circuit 70 comprises an amplifier 72, having an inverting input coupled, by means of a resistor 73 (with resistance $R_{IN}$ of between approximately 5 MΩ and 20 MΩ; for example $R_{IN}$ is approximately 10 MΩ), to the supply terminal 12a of the main bridge 12, for receiving the supply signal $V_{IN}$, and a non-inverting input that can be coupled, alternatively, to one of the lines for supply of the electrical loads 20a-20n, to pick up the output signal $V_{out\_a}$, $V_{out\_b}$, ..., $V_{out\_n}$ supplied to the respective electrical load 20a-20n. For this purpose, the adaptive-control circuit 70 comprises a multiplexer device 74, including a plurality of "n" switches 74a-74n, each of which is connected between the non-inverting input of the comparator 72 and a respective line for supply of the loads 20a- 20n. The multiplexer device 74 operates in such a way that the non-inverting input of the amplifier 72 is connected, each time, to only one of the output signals $V_{out\_a}$, $V_{out\_b}$, ..., $V_{out\_n}$, according to the time slot in which it is operating (for example, in the time slot $\tau$1 it receives the signal $V_{out\_a}$, in the time slot $\tau_2$ it receives the signal $V_{out\_b}$, etc.).

The output of the amplifier 72 is connected in feedback mode to the inverting input via a transistor 76, for example a MOSFET of an n type. The source terminal S of the transistor 76 is connected to the output of the comparator 72, whereas the drain terminal D and gate terminal G are both connected to the non-inverting input of the amplifier 72. In this way, the transistor 76 is traversed in conduction by a current proportional to the supply signal $V_{IN}$. Moreover connected to the output of the amplifier 72 is a transistor 78, for example a MOSFET of an n type. The transistor 78 comprises a source terminal S connected to the output of the amplifier 72, a gate terminal G connected to the gate terminal G of the transistor 76 (and hence to the inverting input of the amplifier 72), and a drain terminal D. In particular, the drain terminal D of the transistor 76 is connected to a supply terminal 80 at voltage $V_{DD}$ via a transistor 79. The transistor 79 comprises a source terminal S connected to the supply terminal 80, and a drain terminal D and a gate terminal G connected to one another. A further transistor 82 is connected in current-mirror configuration to the transistor 79. In particular, the transistor 82 comprises a gate terminal connected to the gate terminal of the transistor 79, a source terminal connected to the supply terminal 80, and a drain terminal, connected to a control logic 85. The control logic 85 includes, according to the embodiment illustrated, the control logic 42 described with reference to Figure 8 and the control logic 54 described with reference to Figure 11.

The adaptive-control circuit 70 converts the input voltage $V_{IN}$ into a current signal $i_{IN}$ proportional to the voltage $V_L$ on the inductor 18 and enables control of the peak current of the inductor 18, preventing it from increasing excessively. In particular, the circuit 70 has the task of generating a current signal $S_{in} = M \cdot i_{IN}$ (where 1:M is the gain ratio of the current mirror formed by the transistors 79 and 82) that is proportional to the voltage $V_L$ present on the inductor 18.

The current signal $S_{in}$ is given by

$$S_{in} = (V_{IN} - V_{out\_x}) \cdot M/R_{IN} \qquad (7)$$

where $V_{out\_x}$ assumes the values $V_{out\_a}$, or $V_{out\_b}$, ..., or $V_{out\_n}$, according to the time slot considered.

The current signal $S_{in}$ thus generated is used by the control logic 85 for generating a control signal, of duration $T_{ON}$, designed to keep the high-side switch 13 in the ON state (i.e., in conduction). In this way, the peak current $I_{Lmax}$ that flows through the inductor 18 remains constant irrespective of the input voltage $V_{IN}$.

The time interval $T_{ON}$ during which the inductor 18 is charged assumes a variable value according to the input voltage value $V_{IN}$ or, rather, according to the value assumed by the current signal $i_{IN}$, which is proportional to the value of voltage drop $V_L$ on the inductor 18.

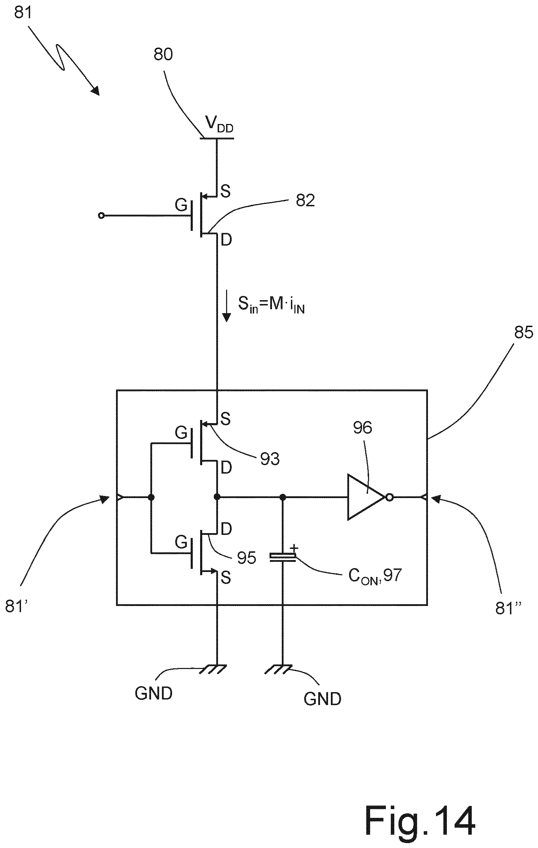

In greater detail, the control logic 85 receives at input, via the transistor 82, the signal $S_{in}$ proportional to the current $i_{IN}$ that flows through the resistor 73 (and in the branch comprising the transistors 78 and 79). The signal $S_{in}$ is

received by a time-delay generation circuit 81, illustrated in Figure 14, integrated in the control logic 85. The time-delay generation circuit 81 comprises a transistor 93, a MOSFET of a p type, having the source terminal connected to the drain terminal of the transistor 82, with a transistor 95 in series, a MOSFET of an n type, having the source terminal connected to the reference terminal GND. The gate terminals of the transistors 93 and 95 form an input port 81' of the time-delay generation circuit 81.

The drain terminals of both of the transistors 93 and 95 are connected to one another and to an inverter 96. Moreover connected between the drain terminal of the transistors 93 and 95 and the reference terminal GND is a capacitor 97, having a capacitance $C_{ON}$ of between 100 fF and 1 pF, for example, 500fF.

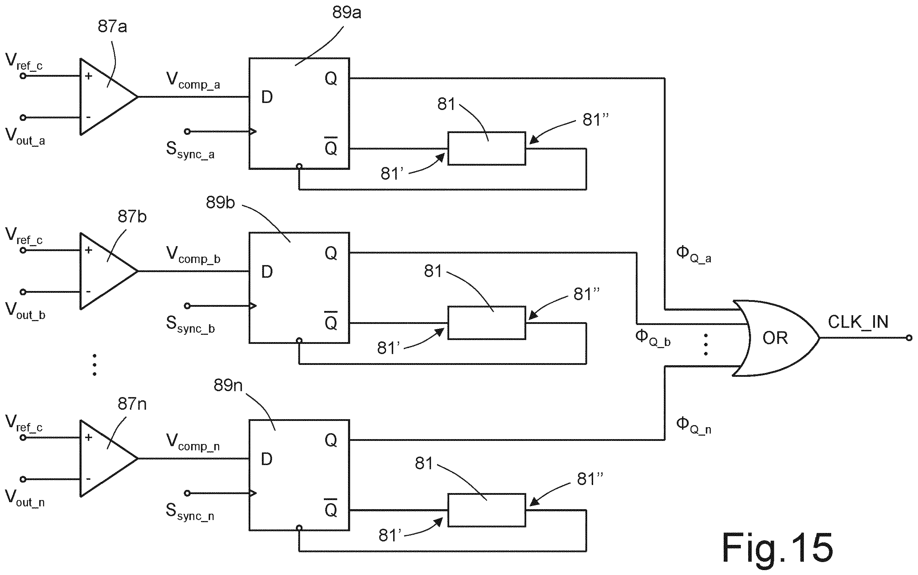

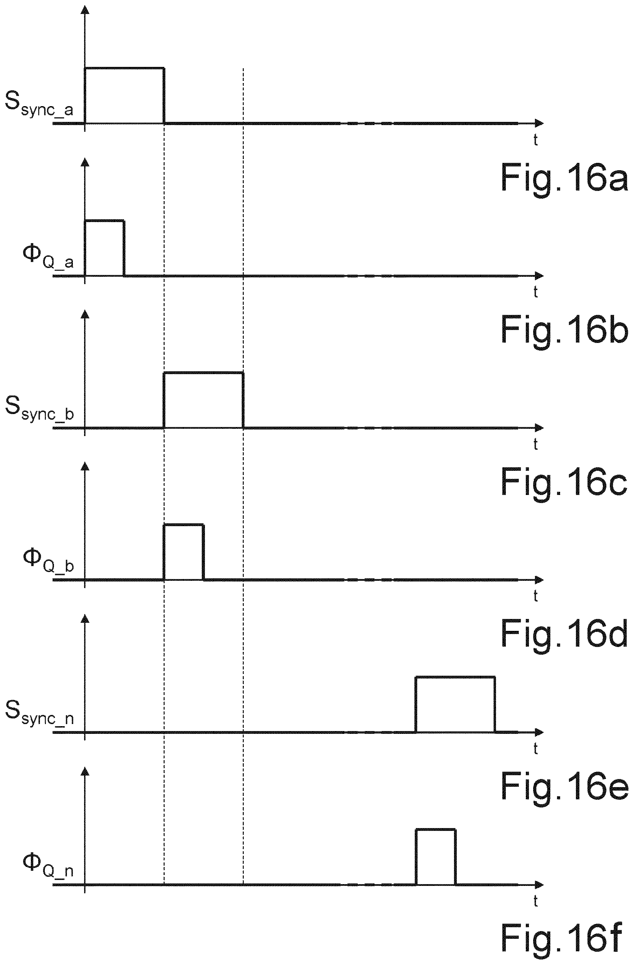

As illustrated in Figure 15, the hysteretic comparators 87a-87n (already illustrated in Figure 13) are connected each to a respective flip-flop 89a-89n of a D type, in such a way that the output of each hysteretic comparator 87a-87n is supplied at input to the respective flip-flop 89a-89n. Each flip-flop 89a-89n moreover includes a synchronization input, for receiving a respective synchronization signal $S_{sync\_a}$-$S_{sync\_n}$ (clock signals, schematically illustrated in Figures 16a, 16c, 16e).

The output /Q of each flip-flop 89a-89n is fed back by means of the time-delay generation circuit 81 of Figure 14. The output Q of each flip-flop 89a-89n supplies, instead, a respective signal $\Phi_{Q\_a}$-$\Phi_{Q\_n}$ (illustrated in Figures 16b, 16d, 16f), each defining a rectangular-window time signal that defines the duration $T_{ON}$. In this way each flip-flop 89a-89n is able to generate a pulse of duration $T_{ON}$ compensated as a function of the value of $V_{IN}$ (is it is to be recalled herein that the time-delay generation circuit 81 receives at input the signal $S_{in}$). The signals $\Phi_{Q\_a}$-$\Phi_{Q\_n}$ are supplied at input to an OR logic, which generates at output the clock signal CLK_IN, used, as illustrated previously, for driving the main bridge 12.

In conclusion, the time-delay generation circuit 81 of Figure 14 receives at input a digital signal generated by the flip-flop 89a-89n to which it is connected and produces a pulse of duration $T_{ON}$ proportional to the current signal $S_{in}$, exploiting the capacitor 97 and the inverter 96. Since the current $S_{in}$ is proportional to the voltage $V_L$ on the inductor 18 thanks to the adaptive-control circuit 70, the time $T_{ON}$ is inversely proportional to the voltage $V_L$ (as highlighted by Eq. (9)). This enables generation of a peak current $I_{Lmax}$ in the inductor 18 of a constant value as the input voltage $V_{IN}$ varies.

The following Eq. (8) shows the time interval $T_{ON}$ during which the high-side switch 13 is closed and the inductor 18 is charged (with reference to Figure 5b, the time intervals $t_1$-$t_{1a}$, $t_2$-$t_{2a}$, $t_n$-$t_{na}$, etc.), as a function of the current $i_{IN}$ that charges the capacitor 97:

$$\begin{cases} T_{ON} = C_{ON} \dfrac{V_{th\_inv}}{S_{IN}} = C_{ON} \dfrac{V_{DD}}{2} \dfrac{1}{S_{IN}} \\[4mm] S_{IN} = M \dfrac{V_{IN} - V_{out\_x}}{R_{IN}} = M \dfrac{V_L}{R_{IN}} \end{cases} \qquad (8)$$

wherein $V_{out\_x}$ is the output voltage on the electrical load 20a-20n considered, and chosen in the group comprising the output voltages $V_{out\_a}$, $V_{out\_b}$, ..., $V_{out\_n}$; $V_{th\_inv}$ is the threshold voltage of the inverter 96 of Figure 14; and $C_{ON}$ is the value of capacitance of the capacitor 97 of Figure 14.

From Eq. (8) we find that $T_{ON}$ is given by:

$$T_{ON} = C_{ON} \dfrac{V_{DD}}{2} \dfrac{R}{MV_L} \qquad (9)$$

i.e., $T_{ON}$ is proportional to $1/V_L$.

As regards the peak current $I_{Lmax}$ that flows in the inductor 18, we have that said current is given, approximately, by the following Eq. (10):

$$I_{L\,max} = \dfrac{V_L}{L} T_{ON} = \dfrac{V_L}{L} C_{ON} \dfrac{V_{DD}}{2} \dfrac{R}{MV_L} = \dfrac{RC_{ON}V_{DD}}{2ML} \qquad (10)$$

whence we find that the peak current $I_{Lmax}$ does not depend directly upon the value of the input supply voltage $V_{IN}$.

The control logic 85 carries out generation of the signals for turning-on/turning-off the high-side switch 13 and the low-side switch 14, but also generation of the control signals of the switches of the multiplexer device 74 and of the anti-oscillation switch 58. For this purpose, the control logic 42 receives at input, in addition to the clock signal CLK_IN and to the current signal $S_{in}$, also a plurality of "n" signals indicating the output voltages $V_{out\_a}$-$V_{out\_n}$ of each electrical load 20a-20n. For this purpose, coupled to each load 20a-20n, is a respective hysteretic comparator 87a-87n (in which each hysteretic comparator, of a type in itself known, comprises a first threshold $V_{th}^-$ and a second threshold $V_{th}^+$, with $V_{th}^- < V_{th}^+$). Each hysteretic comparator 87a-87n comprises an inverting input configured for receiving one of the output signals $V_{out\_a}$-$V_{out\_n}$, and a non-inverting input configured for receiving a reference signal $V_{ref\_c}$.

The reference signal $V_{ref\_c}$ is a bandgap reference, independent of the supply voltage and of the temperature. In Figure 13, the comparators 87a-87n all receive one and the same reference signal $V_{ref\_c}$.

However, it is possible to generate a reference signal. In actual fact, each comparator will receive a reference $V_{ref\_c}$ that is different for each comparator 87a-87n, on the basis of the values of the output voltages $V_{out\_a}$-$V_{out\_n}$. The hysteretic control loop causes each output to be regulated to the value $V_{ref}$ set.

The output of each hysteretic comparator 87a-87n indicates the level of voltage assumed by each output signal $V_{out\_a}$-$V_{out\_n}$. The signal $V_{comp\_a}$, $V_{comp\_b}$, ..., $V_{comp\_n}$ generated at output by each hysteretic comparator 87a-87n is received at input by the control logic 85 and processed thereby to be used during the steps of supply of the electrical loads 20a-20n. The latter, in fact, are supplied (recharged) only when the respective output voltage signal $V_{out\_a}$, $V_{out\_b}$, ..., $V_{out\_n}$ drops below the threshold defined by the reference signal $V_{ref\_c}$.

Each hysteretic comparator 87a-87n has two possible output logic levels, in particular the ground reference value (GND, or equivalent) or the value of the supply signal ($V_{DD}$). When the n-th signal $V_{comp\_n}$ at output from the n-th hysteretic comparator 87n is equal to $V_{DD}$, then the respective output voltage $V_{out\_n}$ has dropped below the reference $V_{ref\_c}$ and the respective electrical load 20n must be recharged. When the n-th signal $V_{comp\_n}$ at output from the n-th hysteretic comparator 87n is equal to GND, then the respective output voltage $V_{out\_n}$ is higher than the reference $V_{ref\_c}$ and the respective electrical load 20n does not have to be recharged. The characteristic of the n-th comparator 87n is centred around the reference $V_{ref\_c}$ and is the classic hysteretic characteristic (indicatively with thresholds $V_{th}^+ > V_{ref\_c}$ and $V_{th}^- < V_{ref\_c}$).

In order to decide whether each electrical load 20a-20n needs to be recharged, each hysteretic comparator 87a-n monitors continuously, as has been said, the output signals $V_{out\_a}$-$V_{out\_n}$. If one of the output signals $V_{out\_a}$-$V_{out\_n}$ drops below the threshold $V_{th}^-$ of the respective hysteretic comparator 87a-87n, the main bridge is driven as described previously, and the respective electrical load 20a-20n is supplied and charged. This occurs, as has been said, in the time slot $\tau_1$-$\tau_n$ envisaged for supplying that particular electrical load 20a-20n. The charging step terminates when the output signal $V_{out\_a}$-$V_{out\_n}$ exceeds the threshold $V_{th}^+$ (and in any case within the reserved time slot). With this type of control, the output "ripples" depend exclusively upon the hysteresis of the comparators 87a-87n, whilst the frequency of the charging step is a function of the capacitance of the output capacitor and of the current of the load. In this context, the load current is the current that flows in the load resistance connected in parallel to the output capacitance, as represented in Figure 13 for each electrical load 20a-20n. The lower the load resistance, the higher the load current, and consequently, the greater the need to recharge the electrical load and the higher the frequency of the ripple.

Each comparator 87a-87 is configured to have the hysteresis equal to the maximum value of ripple tolerated by the specific application, for example approximately 10- 50 mV.

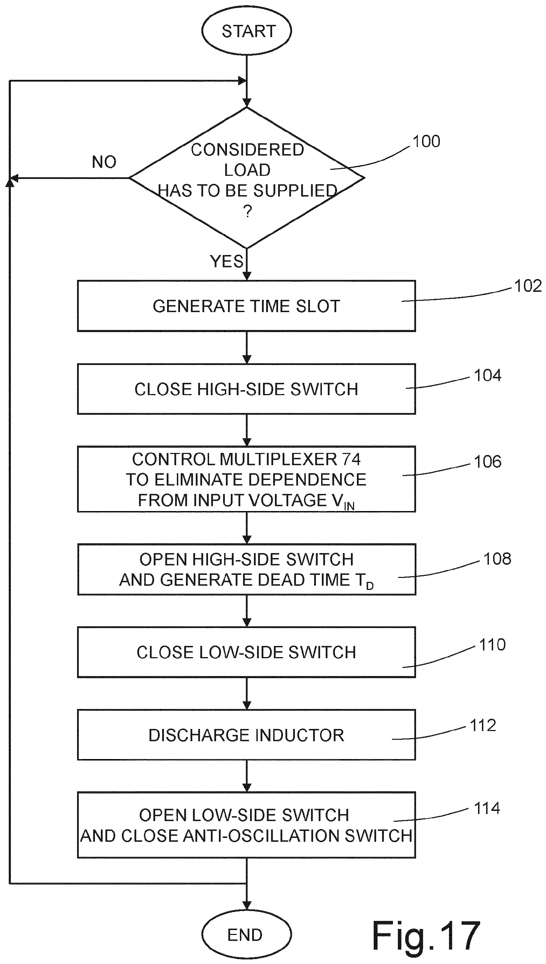

Figure 17 illustrates, schematically and by means of a block diagram, the steps performed by the control logic 85 in each time slot $\tau_1$-$\tau_n$, i.e., for each electrical load 20a-20n to be supplied. In the case where the corresponding electrical load 20a-20n does not need to be supplied, the steps of Figure 17 are not carried out (or rather, just step 110 is carried out where it is verified whether an electrical load 20a-20n needs to be supplied).

First of all, the control logic 85 verifies (step 100) whether a first electrical load (hereinafter the electrical load 20a is considered) needs to be supplied, on the basis of the value assumed by the signal $V_{comp\_a}$ generated by the hysteretic comparator 87a (see also what has been said with reference to Figure 13). If not (i.e., if the electrical load 20a does not need to be supplied), flow returns to a mode of observation of the outputs until at least one output needs to be charged. Otherwise, if the electrical load 20a is to be supplied, the time slot $\tau1$ is generated (step 102), the corresponding switch for supply of the load is closed, and control passes to step 104.

In step 104, the control logic 85 closes the high-side switch 13. For this purpose, at a first rising edge of the clock signal CLK_IN, the control logic 85 generates the signals $\varphi_A$ and $\varphi_B$, for closing the switch 33 and opening the switch 32 (see also Figure 6). The signals $\varphi_A$ and $\varphi_B$ generated by the control logic 85 are, for example, supplied at input to a respective driving circuit (not illustrated, for example an amplifier or a cascade of inverters), connected to the switches 32 and 33, and configured for controlling the switches 32, 33 in opening/closing using voltage signals having an appropriate amplitude variable as a function of the specific implementation of the switches 32, 33 (for example, in the case of switches 32, 33 of a MOSFET type, the voltage signals generated by the driving devices as a function of the signals $\varphi_A$ and $\varphi_B$ are such as to drive the respective MOSFET into conduction by generating a gate-source voltage higher than the threshold voltage of the respective MOSFET).

As described previously, following upon generation of the signals $\Phi_A$ and $\Phi_B$ the signal $V_{HS}'$ that enables closing of the high-side switch 13 is asserted. As soon as the high-side switch 13 conducts, the voltage at the terminal 18a starts to rise, locking to $V_{IN}$. At the same time, owing to the capacitive effect, given that the difference of potential across the capacitor 29 remains unvaried, the voltage $V_{BOOT}$ rises, thus enabling the driving device 34 to generate a signal $V_{HS}$ such as to keep the high-side switch 13 in conduction.

The inductor 18 can hence be charged.

The control logic 85 moreover generates a signal $\Phi_{out\_a}$ for driving the coupling switch 22a (the time slot $\tau 1$ is now considered). The signal $\Phi_{out\_a}$ (possibly supplied to the coupling switch 22a via an appropriate driving device similar to the one already described) drives the coupling switch 22a in conduction, thus connecting the inductor 18 to the load 20a.

Next (step 106), the control logic 85 generates the signal $\Phi_{comp\_a}$ for closing the switch 74a of the multiplexer device 74. The control logic 85 hence receives at input the signal $S_{in}$ and calculates, according to Eq. (3) given above, the time interval $T_{ON}$ for charging the inductor 18 completely.

At the end of $T_{ON}$ (step 108), the high-side switch 13 opens (the control logic 85 generates an appropriate signal $V_{HS}$' such that, via the driving device 34, the high-side switch 13 is driven into the open state) and the dead time $T_D$ is generated as described with reference to Figure 8.

The signal $V_{HS}$' is a CMOS logic signal, of amplitude equal to $V_{DD}$. The duration at the high value of the clock signal CLK_IN is equal to $T_{ON}$. Hence, the high-side switch 13 opens instantaneously as CLK_IN drops to the low level. Instead, the low-side switch 14 closes with a certain delay given by the value of the dead time $T_D$. During the dead time $T_D$ the current of the inductor 18 circulates in the parasitic diode 16 of the low-side switch 14 and the terminal 18a, at voltage $V_P$, drops to values lower than the reference GND (approximately -0.7V).

Then, the control logic 85 drives the low-side switch 14 into the closed state by generating the signal $V_{LS}$', which is applied, via the driving device 35, to the control terminal of the low-side switch 14. The signal $V_{LS}$', like $V_{HS}$', is a CMOS logic signal of amplitude $V_{DD}$.

The inductor 18 is then discharged (step 112). During the step 112 of discharge of the inductor 18 the discharge current that flows through the low-side switch 14 is monitored by means of the current detector 51, in particular by means of the comparator 53 (see also Figure 11 and the corresponding description). The control logic 85 receives the signal $S_{zero}$ generated by the comparator 53 and, when it detects that the discharge current of the inductor 18 has reached a zero value (for example by means of comparison with a reference value stored), drives (step 114) the low-side switch 14 into the open state (thus generating the signal $V_{LS}$') and drives the anti-oscillation switch 58 into the closed state, thus generating the signal $\Phi_C$ (as described previously). Before passing to the possible subsequent time slot the coupling switch 22a is re-opened.

Then, the next electrical load 20b can be supplied, by generating a new time slot $\tau_2$ (as has been said, only if necessary).

The procedure is repeated for all the loads and, after supply of the n-th electrical load 20n, it can starts off again with supply of the electrical load 20a.

The frequency of the clock signal CLK_IN is, for example, defined on the basis of a clock signal CLK generated outside the DC-DC converter circuit 10, or generated by a clock circuit of an integrated type. The clock frequency CLK is, for example, between approximately 100 kHz and approximately 400 kHz, for example approximately 230 kHz.

The signal CLK_IN has a frequency equal to CLK. The clock signal CLK can be generated by means of an oscillator circuit of a known type. On each rising edge of the clock signal the time slot is generated, of a duration equal to the period of oscillation of the clock signal. When no output needs to be recharged the clock is set in "sleep" mode, i.e., in low-consumption mode, and no time slot is generated. As soon as an output needs to be charged, the finite-state machine is woken up again and starts again from where it had stopped with generation of the time slots.

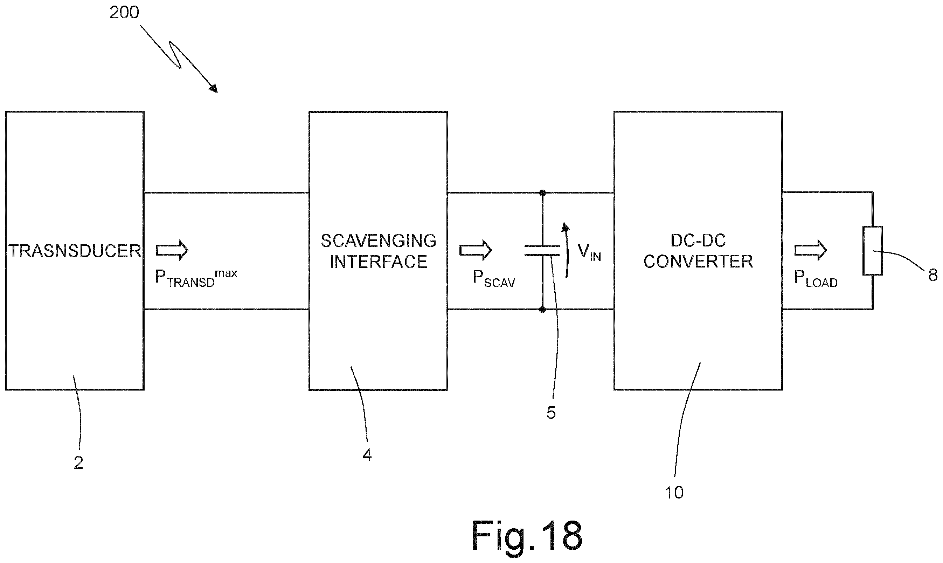

Figure 18 shows an energy harvesting system 200 comprising the DC-DC converter 10 according to the present invention. The energy harvesting system 200 is similar to the energy harvesting system 1 of Figure 1 (elements in common are designated by the same reference numbers), and is not described further herein.

The transducers 2 can be all of the same type or of a type different from one another, indifferently. For example, the transducer/transducers 2 can be chosen in the group comprising: electrochemical transducers (designed to convert chemical energy into an electrical signal), electromechanical transducers (designed to convert mechanical energy into an electrical signal), electroacoustic transducers (designed to convert variations of pressure into an electrical signal), electromagnetic transducers (designed to convert a magnetic field into an electrical signal), photoelectric transducers (designed to convert light energy into an electrical signal), electrostatic transducers, thermoelectrical transducers.

The DC-DC converter 10 is connected to the output of the scavenging interface 4. The energy stored on the storage capacitor of the scavenging interface 4 (known) supplies the DC-DC converter. The input voltage of the DC-DC converter is hence the voltage produced by the scavenging interface 4.

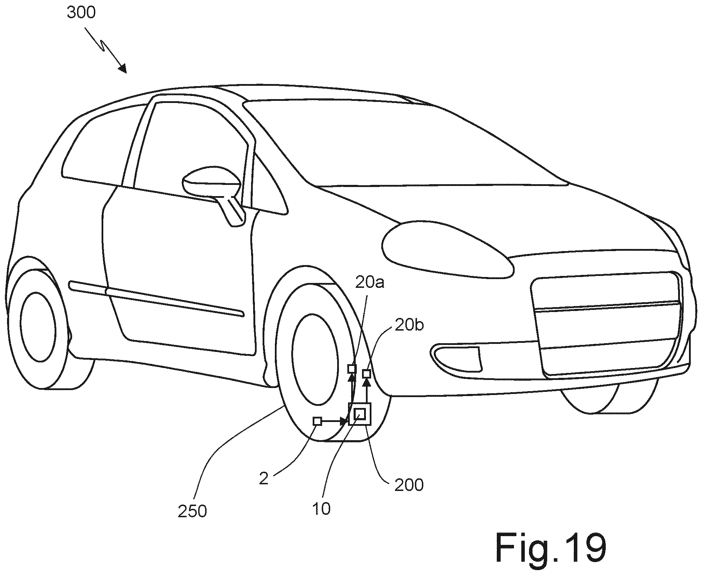

Figure 19 shows a vehicle 300 comprising the energy harvesting system 200 of Figure 18, according to one embodiment of the present invention. The vehicle 300 is, in particular, a motor vehicle. It is evident, however, that the energy harvesting system 200 can be used in any vehicle 300 or in systems or apparatuses other than a vehicle.

In particular, the energy harvesting system 200 can find application in generic systems in which it is desirable to harvest, store, and use environmental energy, in particular by means of conversion of mechanical energy into electrical energy.

With reference to Figure 19, the vehicle 300 comprises one or more transducers 2 coupled in a known way to a portion of the vehicle 300 subjected to mechanical stresses and/or vibrations, for converting said mechanical stresses and/or vibrations into electric current.

The energy harvesting system 200 is connected to one or more electrical loads 20a, ..., 20n, via interposition of the DC-DC converter 10, as described. In particular, according to an application of the present invention, the electrical loads 20a, ..., 20n comprise, for example, TPM ("tyre parameters monitoring") sensors for monitoring parameters of tyres 250 of the vehicle 300. In this case, the TPM sensors are coupled to an internal portion of the tyres 250 of the vehicle 300. Likewise, also the transducers 2 (for example, of an electromagnetic, or piezoelectric type) are coupled to an internal portion of the tyres 250. The stress on the transducers 2 when the vehicle 300 is travelling causes production of a current/voltage electrical signal at output from the transducer 2 by means of conversion of the mechanical energy into electrical energy. The electrical energy thus produced is stored, as previously described, in the storage element 5 and supplied, via the DC-DC converter 10, to the TPM sensors.

According to one embodiment of the present invention, the energy harvesting system 200 and the TPM sensors are glued inside one or more tyres 250. The impact of the tyre 250 on the ground during motion of the vehicle 300 enables production of electrical energy.

As an alternative to what is illustrated in Figure 19, the energy harvesting system 200 can be set in any other portion of the vehicle 300, and/or used for supplying an electrical load 20a-20n other than or additional to the TPM sensors.

Another possible application of the energy harvesting system 200 is the generation of electrical energy by exploiting the mechanical energy produced by an individual when he is walking or running. In this case, the energy harvesting system 200 is located inside the shoes of said individual (for example, inside the sole). In systems aimed at fitness, where it is particularly interesting to count the steps, it is useful to recover energy from the vibrations induced by walking/running to be able to supply, without using a battery, acceleration sensors and/or RFID transmitters capable of communicating with cellphones, music-playing devices, or any other apparatus involved in information on the steps performed.

From an examination of the characteristics of the invention obtained according to the present disclosure the advantages that it affords are evident.

In particular, the DC-DC converter 10 according to the present invention enables supply of a plurality of loads 20a-20n that require low supply voltages with high efficiency, using a single inductor 18 and overcoming problems of cross regulation between the loads 20a-20n.

Moreover, the DC-DC converter 10 can be completely integrated in an energy harvesting system 200, which must typically guarantee high performance and strength in regard to stresses. The high integratability is afforded by the presence of the bootstrap network 25 for turning on the high-side switch 13 of a type internal to (integrated in) the DC-DC converter 10.

In addition, the dead-time generation circuit 40 guarantees generation of an optimal dead time $T_D$ for different input voltages $V_{IN}$.

Finally, the adaptive-control circuit 70 enables operation of the DC-DC converter 10 in constant-peak-current mode over a wide range of input voltages, enabling compensation of the time interval $T_{ON}$ for different values of the input voltage $V_{IN}$.

Finally, it is clear that modifications and variations may be made to what has been described and illustrated herein without thereby departing from the sphere of protection of the present invention, as defined in the annexed claims.

In particular, the control technique described is regardless of the circuit architecture of the DC-DC converter. It can be applied to any DC-DC converter of a SIMO type, of a voltage-boosting type, of a "buck-boost" type, etc.

**Claims**

**1.** A DC-DC converter (10) for independently supplying a plurality of electrical loads (20a-20n), comprising:

- a charge switch (13) and a discharge switch (14), connected in series to one another between a source of electrical energy (12a), adapted to supply an input supply signal (VIN), and a reference terminal (GND);
- an inductor (18) having a first conduction terminal (18a) and a second conduction terminal (18b), the first conduction terminal (18a) of the inductor (18) being connected between the charge switch (13) and the discharge switch (14);
- a plurality of coupling switches (22a-22n), each of which is connected between the second conduction terminal (18b) of the inductor (18) and a respective electrical load (20a; 20b; 20n) of the plurality of electrical loads (20a-20n) to supply to the respective electrical load an output supply signal ($V_{out\_a}$-$V_{out\_n}$) ; and
- an adaptive-control circuit (70, 81), including means for acquiring, for each electrical load to be supplied, a signal indicative of the voltage value ($V_L$) stored between the first and second conduction terminals (18a, 18b) of the inductor (18), and means for generating, for each electrical load to be supplied, a first time interval ($T_{ON}$) whose duration varies with the voltage value ($V_L$) across the inductor (18) in such a way that the first time interval ($T_{ON}$) ends when an electric current ($I_L$), which is a function of said voltage value ($V_L$), through the inductor (18) reaches a predefined peak current value ($I_{Lmax}$),

wherein, during the first time interval ($T_{ON}$), the charge switch (13) is controlled so as to connect the first conduction terminal (18a) of the inductor (18) to the source of electrical energy (12a) in order to charge the inductor (18), and wherein, during a second time interval subsequent to the first time interval, the discharge switch (14) is controlled so as to connect the first conduction terminal (18a) of the inductor (18) to the reference terminal (GND) for discharging the inductor (18).

2. The converter according to claim 1, wherein the adaptive-control circuit (70, 81) comprises an operational circuit (72) including: a first input terminal coupled to the source of electrical energy (12a) for receiving the input supply signal ($V_{IN}$) ; a second input terminal, connectable to the electrical load to be supplied, for receiving the respective output supply signal ($V_{out\_a}$-$V_{out\_n}$) ; and an output terminal configured to supply an intermediate signal ($S_{in}$) proportional to the difference between the input supply signal ($V_{IN}$) and the output supply signal ($V_{out\_a}$-$V_{out\_n}$), said first time interval ($T_{ON}$) being inversely proportional to said intermediate signal ($S_{in}$).

3. The converter according to claim 1 or claim 2, further comprising:

 - a plurality of comparator circuits (87a-87n), each of which is configured for receiving at input a respective output supply signal ($V_{out\_a}$-$V_{out\_n}$) and a respective comparison reference signal ($V_{ref\_c}$), and generating a respective result signal ($V_{comp\_a}$-$V_{comp\_n}$) obtained from the comparison between the output supply signal and the comparison reference signal, said result signal being indicative of the need to supply the respective electrical load; and
 - a control logic (85) configured for receiving at input, for each comparator circuit, the result signal ($V_{comp\_a}$-$V_{comp\_n}$) and controlling operation of the coupling switch (22a-22n) on the basis of the result signal ($V_{comp\_a}$-$V_{comp\_n}$).

4. The converter according to claim 3, wherein the control logic (85) further comprises processing means, configured for defining a plurality of time intervals ($\tau_1$-$\tau_n$) subsequent to one another, each coupling switch (22a-22n) being closed during a respective time interval of said plurality of time intervals ($\tau_1$-$\tau_n$) and open during the remaining time intervals, according to a time-multiplexing control technique.

5. The converter according to any one of the preceding claims, wherein the inductor (18) is charged during the first time interval and discharged during the second time interval, according to a conduction mode of a discontinuous type, or according to a conduction mode of a pseudo-continuous type.

6. The converter according to any one of the preceding claims, further comprising:

 - a comparator (53) coupled to the first conduction terminal (18a) of the inductor (18) for receiving an electrical signal present at the first conduction terminal (18a), and to the reference terminal (GND) for receiving an electrical signal present at the reference terminal (GND), and configured for generating at output, on the basis of a comparison between the electrical signal at the first conduction terminal (18a) and the electrical signal at the reference terminal (GND), a zero-current signal ($S_{zero}$); and
 - a discharge-driving circuit (54, 35), configured for receiving at input the zero-current signal ($S_{zero}$) and, on the basis of the zero-current signal ($S_{zero}$), detecting, during the second time interval, a zero-current state in which the discharge current that flows from the inductor (18) to the reference terminal (GND), through the discharge switch (14), reaches a value close to the zero value, and, when the zero-current state is reached, opening the discharge switch (14).

7. The converter according to claim 6, further comprising an anti-oscillation switch (58), connected in parallel to the inductor (18), the discharge-driving circuit (54, 35) being configured for closing the anti-oscillation switch (58) when the discharge current that flows from the inductor (18) to the reference terminal (GND), through the discharge switch (14), reaches said value close to the zero value.

8. The converter according to any one of the preceding claims, further comprising a circuit for generation of dead times (40), configured for generating a third time interval ($T_D$) between the first time interval and the second time interval.

9. The converter according to claim 8, wherein the circuit for generation of dead times (40) comprises:

- a conduction-control logic (42), configured for generating a first charge-control signal ($V_{HS}$'), adapted to control the charge switch (13) in a first operating state and, alternatively, in a second operating state, and to generate a first discharge-control signal ($V_{LS}$'), adapted to control the discharge switch (14) in the first operating state when the charge switch (13) is in the second operating state, and vice versa;
- a first delay element (46), configured for acquiring a second charge-control signal ($V_{HS}$), which is a function of the first charge-control signal ($V_{HS}$'), and delaying it by a value equal to the third time interval ($T_D$) to generate a delayed charge-control signal ($V_{Hs\_D}$) ;
- a second delay element (48), configured for acquiring a second discharge-control signal ($V_{LS}$), which is a function of the first discharge-control signal ($V_{LS}$'), and delaying it by a value equal to the third time interval ($T_D$) to generate a delayed discharge-control signal ($V_{LS\_D}$), the conduction-control logic (42) being moreover configured for acquiring the delayed charge-control signal ($V_{HS\_D}$) and the delayed discharge-control signal ($V_{LS\_D}$), detecting a variation from the first operating state to the second operating state of one between the charge switch (13) and the discharge switch (14), and generating a corresponding variation from the second operating state to the first operating state of the other between the charge switch (13) and the discharge switch (14).

10. The converter according to any one of the preceding claims, further comprising a first driving circuit (25) for driving the charge switch (13), the first driving circuit (25) comprising:

- a driving device (34), including a plurality of inverters connected in series to one another;
- a bootstrap capacitor (29), coupled to a first and a second supply input of the driving device (34) for supplying the driving device (34);
- a bootstrap switch (30), connected between a supply terminal (25a) and the first supply input of the driving device (34), and operable during the first time interval ($T_{ON}$) for coupling the supply terminal (25a) to the bootstrap capacitor (29), thus charging the bootstrap capacitor (29) and supplying the driving device (34).

11. An energy-harvesting system (200), adapted to supply a plurality of electrical loads (20a-20n), comprising:

- a transducer (2), configured for converting energy coming from an energy source which is external to said system (200) into an AC electrical signal;
- a rectifier circuit (4), configured for receiving at input the AC electrical signal and supplying at output a DC output signal;
- a first storage element (5), which is coupled to the rectifier circuit (4) for receiving at input the DC output signal, and is configured for storing electrical energy; and
- a DC-DC converter (10) according to any one of claims 1-10, which is connected between the rectifier circuit (4) and the electrical loads (20a-20n), and is configured for receiving at input the DC output signal generated by the rectifier circuit (4) and supplying the electrical loads (20a-20n) .

12. An apparatus (300) comprising the energy-harvesting system (200) according to claim 11.

13. The apparatus according to claim 12, wherein said apparatus is a means of transport or footwear.

14. A method for operating a DC-DC converter (10) for independently supplying a plurality of electrical loads (20a-20n), the DC-DC converter comprising:

- a charge switch (13) and a discharge switch (14), connected in series to one another between a source of electrical energy (12a), adapted to supply an input supply signal ($V_{IN}$), and a reference terminal (GND);
- an inductor (18) having a first conduction terminal (18a) and a second conduction terminal (18b), the first conduction terminal (18a) of the inductor (18) being connected between the charge switch (13) and the discharge switch (14); and
- a plurality of coupling switches (22a- 22n), each of which is connected between the second conduction terminal (18b) of the inductor (18) and a respective electrical load (20a; 20b; 20n) of the plurality of electrical loads (20a-20n) to supply to the respective electrical load an output supply signal ($V_{out\_a}$-$V_{out\_n}$),

the method comprising the steps of:

- acquiring, for each electrical load to be supplied, a signal indicating the voltage value ($V_L$) stored between the first and second conduction terminals (18a, 18b) of the inductor (18);

- generating, for each electrical load to be supplied, a first time interval ($T_{ON}$) whose duration varies with the signal indicating the voltage value ($V_L$) detected across the inductor (18) ;
- during the first time interval ($T_{ON}$), controlling the charge switch (13) so as to connect the first conduction terminal (18a) of the inductor (18) to the source of electrical energy (12a) for charging the inductor (18);
- ending the first time interval ($T_{ON}$) when an electric current ($I_L$), which is a function of said voltage value ($V_L$), flowing through the inductor (18) reaches a predefined peak current value ($I_{Lmax}$); and
- during a second time interval subsequent to the first time interval, controlling the discharge switch (14) so as to connect the first conduction terminal (18a) of the inductor (18) to the reference terminal (GND) for discharging the inductor (18).

15. The method according to claim 14, further comprising the steps of:

- for each electrical load to be supplied, comparing a respective output supply signal ($V_{out\_a}$-$V_{out\_n}$) with a respective comparison reference signal ($V_{ref\_c}$) ;
- generating a respective result signal ($V_{comp\_a}$-$V_{comp\_n}$) obtained from the comparison between the output supply signal and the comparison reference signal, said result signal being indicative of the need to supply the respective electrical load; and
- controlling operation of the coupling switch (22a-22n) on the basis of the result signal ($V_{comp\_a}$-$V_{comp\_n}$) .

16. The method according to claim 15, further comprising the steps of:

- defining a plurality of time intervals ($\tau_1$-$\tau_n$) subsequent to one another;
- in each time interval, verifying whether a respective electrical load needs to be supplied; and, if so,
- closing a respective coupling switch (22a-22n) and maintaining the remaining coupling switches open.

17. The method according to any one of claims 14-16, comprising the step of charging the inductor (18) during the first time interval and discharging the inductor (18) during the second time interval, according to a conduction mode of a discontinuous type or according to a conduction mode of pseudo-continuous type.

18. The method according to any one of claims 14-17, further comprising the steps of:

- acquiring an electrical signal present on the first conduction terminal (18a);
- acquiring an electrical signal present on the reference terminal (GND);
- comparing the electrical signal present on the first conduction terminal (18a) with the electrical signal present on the reference terminal (GND);
- generating, on the basis of said comparison, a zero-current signal ($S_{zero}$) indicating a zero-current state in which the discharge current that flows from the inductor (18) to the reference terminal (GND), through the discharge switch (14), assumes a value close to the zero value; and
- when the zero-current state is reached, opening the discharge switch (14).

19. The method according to claim 18, wherein the DC-DC converter (10) further comprises an anti-oscillation switch (58), connected in parallel to the inductor (18), the method further comprising the step of closing the anti-oscillation switch (58) when the discharge current that flows from the inductor (18) to the reference terminal (GND), through the discharge switch (14), reaches said value close to the zero value.

20. The method according to any one of claims 14-19, further comprising the step of generating a third time interval ($T_D$) between the first time interval and the second time interval.

21. The method according to claim 20, comprising the steps of:

- generating a first charge-control signal ($V_{HS}$'), adapted to control the charge switch (13) in a first operating state and, alternatively, in a second operating state;
- generating a first discharge-control signal ($V_{LS}$'), adapted to control the discharge switch (14) in the first operating state when the charge switch (13) is in the second operating state, and vice versa;
- acquiring a second charge-control signal ($V_{HS}$), which is a function of the first charge-control signal ($V_{HS}$');
- delaying the second charge-control signal ($V_{HS}$) by a value equal to the third time interval ($T_D$) to generate a delayed charge-control signal ($V_{HS\_D}$);

- acquiring a second discharge-control signal ($V_{LS}$), which is a function of the first discharge-control signal ($V_{LS}'$) ;
- delaying the second discharge-control signal ($V_{LS}$) by a value equal to the third time interval ($T_D$) to generate a delayed discharge-control signal ($V_{LS\_D}$) ;
- acquiring the delayed charge-control signal ($V_{HS\_D}$) and the delayed discharge-control signal ($V_{LS\_D}$) :
- detecting, on the basis of the delayed charge-control signal ($V_{HS\_D}$) or of the delayed discharge-control signal ($V_{LS\_D}$), a variation from the first operating state to the second operating state of one between the charge switch (13) and the discharge switch (14); and
- generating a variation from the second operating state to the first operating state of the other between the charge switch (13) and the discharge switch (14).

## Patentansprüche

1.  Gleichstromwandler (10) zum unabhängigen Speisen mehrerer elektrischer Lasten (20a-20n), umfassend:

    - einen Ladeschalter (13) und einen Entladeschalter (14), die zwischen einer elektrischen Energiequelle (12a), die dazu angepasst ist, ein Eingangsspeisesignal (VIN) zu liefern, und einen Referenzkontakt (GND) in Reihe geschaltet sind;
    - einen Induktor (18) mit einem ersten Leitungskontakt (18a) und einem zweiten Leitungskontakt (18b), wobei der erste Leitungskontakt (18a) des Induktors (18) zwischen den Ladeschalter (13) und den Entladeschalter (14) geschaltet ist;
    - mehrere Kopplungsschalter (22a-22n), von denen jeder zwischen den zweiten Leitungskontakt (18b) des Induktors (18) und eine jeweilige elektrische Last (20a; 20b; 20n) der mehreren elektrischen Lasten (20a-20n) geschaltet ist, um die jeweilige elektrische Last mit einem Ausgangsspeisesignal ($V_{out\_a}$-$V_{out\_n}$) zu speisen; und
    - einen Regelkreis (70, 81) mit Mitteln zum Erfassen, für jede zu speisende elektrische Last, eines Signals, das den Spannungswert ($V_L$) angibt, der zwischen dem ersten und dem zweiten Leitungskontakt (18a, 18b) des Induktors (18) gespeichert ist, und Mitteln zum Generieren, für jede zu speisende elektrische Last, eines ersten Zeitintervalls ($T_{ON}$), dessen Dauer mit dem an dem Induktor (18) anliegenden Spannungswert ($V_L$) derart variiert, dass das erste Zeitintervall ($T_{ON}$) endet, wenn ein elektrischer Strom ($I_L$) durch den Induktor (18), der eine Funktion des Spannungswerts ($V_L$) ist, einen vorbestimmten Spitzenstromwert ($i_{Lmax}$) erreicht,

    wobei während des ersten Zeitintervalls ($T_{ON}$) der Ladeschalter (13) dergestalt gesteuert wird, dass er den ersten Leitungskontakt (18a) des Induktors (18) mit der elektrischen Energiequelle (12a) verbindet, um den Induktor (18) zu laden, und wobei während eines zweiten Zeitintervalls, das auf das erste Zeitintervall folgt, der Entladeschalter (14) dergestalt gesteuert wird, dass er den ersten Leitungskontakt (18a) des Induktors (18) mit dem Referenzkontakt (GND) verbindet, um den Induktor (18) zu entladen.

2.  Wandler nach Anspruch 1, wobei der Regelkreis (70, 81) eine Operationsschaltung (72) umfasst, die aufweist:

    einen ersten Eingangskontakt, der mit der elektrischen Energiequelle (12a) gekoppelt ist, um das Eingangsspeisesignal ($V_{IN}$) zu empfangen; einen zweiten Eingangskontakt, der mit der zu speisenden elektrischen Last verbindbar ist, um das jeweilige Ausgangsspeisesignal ($V_{out\_a}$-$V_{out\_n}$) zu empfangen; und
    einen Ausgangskontakt, der dazu eingerichtet ist, ein Zwischensignal ($S_{in}$) auszugeben, das proportional mit der Differenz zwischen dem Eingangsspeisesignal ($V_{IN}$) und dem Ausgangsspeisesignal ($V_{out\_a}$-$V_{out\_n}$) ist, wobei das erste Zeitintervall ($T_{ON}$) umgekehrt proportional zu dem Zwischensignal ($S_{in}$) ist.

3.  Wandler nach Anspruch 1 oder Anspruch 2, ferner umfassend:

    - mehrere Vergleichsschaltungen (87a-87n), von denen eine jede eingerichtet ist zum Empfangen, als Eingang, eines jeweiligen Ausgangsspeisesignals ($V_{out\_a}$-$V_{out\_n}$) und eines jeweiligen Vergleichsreferenzsignals ($V_{ref\_c}$) und zum Generieren eines jeweiligen, durch den Vergleich zwischen dem Ausgangsspeisesignal und dem Vergleichsreferenzsignal erhaltenen Ergebnissignals ($V_{comp\_a}$-$V_{comp\_n}$), wobei das Ergebnissignal die Notwendigkeit anzeigt, die jeweilige elektrische Last zu speisen; und
    - eine Steuerlogik (85), die eingerichtet ist zum Empfangen, als Eingang für jede Vergleichsschaltung, des Ergebnissignals ($V_{comp\_a}$-$V_{comp\_n}$) und zum Steuern eines Betriebs des Kopplungsschalters (22a-22n) auf Basis des Ergebnissignals ($V_{comp\_a}$-$V_{comp\_n}$).

4.  Wandler nach Anspruch 3, wobei die Steuerlogik (85) ferner Verarbeitungsmittel umfasst, die zum Definieren meh-

rerer aufeinanderfolgender Zeitintervalle ($\tau_1$-$\tau_n$) eingerichtet sind, wobei jeder der Kopplungsschalter (22a-22n) gemäß einer Zeitmultiplex-Steuertechnik während eines jeweiligen Zeitintervalls der mehreren Zeitintervalle ($\tau_1$-$\tau_n$) geschlossen und während der übrigen Zeitintervalle geöffnet ist.

5.  Wandler nach einem der vorhergehenden Ansprüche, wobei der Induktor (18) gemäß einem diskontinuierlichen Leitungsmodus oder einem pseudokontinuierlichen Leitungsmodus während des ersten Zeitintervalls geladen und während des zweiten Zeitintervalls entladen wird.

6.  Wandler nach einem der vorhergehenden Ansprüche, ferner umfassend:

    - einen Vergleicher (53), der mit dem ersten Leitungskontakt (18a) des Induktors (18) gekoppelt ist, um ein an dem ersten Leitungskontakt (18a) vorhandenes elektrisches Signal zu empfangen, und mit dem Referenzkontakt (GND) gekoppelt ist, um ein an dem Referenzkontakt (GND) vorhandenes elektrisches Signal zu empfangen, und dazu eingerichtet ist, als Ausgang, basierend auf einem Vergleich zwischen dem elektrischen Signal an dem ersten Leitungskontakt (18a) und dem elektrischen Signal an dem Referenzkontakt (GND) ein Nullstromsignal ($S_{zero}$) zu generieren; und
    - eine Entlade-Ansteuerschaltung (54, 35), die eingerichtet ist zum Empfangen, als Eingang, des Nullstromsignals ($S_{zero}$) und Erkennen, basierend auf dem Nullstromsignal ($S_{zero}$), während des zweiten Zeitintervalls, eines Nullstromzustands, in welchem der Entladestrom, welcher von dem Induktor (18) durch den Entladeschalter (14) zu dem Referenzkontakt (GND) fließt, einen Wert erreicht, der nahe bei dem Nullwert ist, und zum Öffnen des Entladeschalters (14), wenn der Nullstromzustand erreicht ist.

7.  Wandler nach Anspruch 6, ferner umfassend einen Anti-Oszillations-Schalter (58), der parallel zu dem Induktor (18) geschaltet ist, wobei die Entlade-Ansteuerschaltung (54, 35) dazu eingerichtet ist, den Anti-Oszillations-Schalter (58) zu schließen, wenn der Entladestrom, der von dem Induktor (18) durch den Entladeschalter (14) zu dem Referenzkontakt (GND) fließt, den Wert nahe bei dem Nullwert erreicht.

8.  Wandler nach einem der vorhergehenden Ansprüche, ferner umfassend eine Schaltung zum Generieren von Totzeiten (40), die dazu eingerichtet ist, ein drittes Zeitintervall ($T_D$) zwischen dem ersten Zeitintervall und dem zweiten Zeitintervall zu generieren.

9.  Wandler nach Anspruch 8, wobei die Schaltung zum Generieren von Totzeiten (40) umfasst:

    - eine Leitungs-Steuerlogik (42), die zum Generieren eines ersten Lade-Steuersignals ($V_{HS}$') ist, welches dazu angepasst ist, den Ladeschalter (13) in einem ersten Betriebszustand und alternativ dazu in einem zweiten Betriebszustand zu steuern, und zum Generieren eines ersten Entlade-Steuersignals ($V_{LS}$') eingerichtet ist, welches dazu angepasst ist, den Entladeschalter (14) in dem ersten Betriebszustand zu steuern, wenn der Ladeschalter (13) in dem zweiten Betriebszustand ist, und umgekehrt;
    - ein erstes Verzögerungselement (46), welches zum Erfassen eines zweiten Lade-Steuersignals ($V_{HS}$) eingerichtet ist, das eine Funktion des ersten Lade-Steuersignals ($V_{HS}$') ist, und zu dessen Verzögern um einen Wert, der gleich dem dritten Zeitintervall ($T_D$) ist, eingerichtet ist, um ein verzögertes Lade-Steuersignal ($V_{HS\_D}$) zu erzeugen;
    - ein zweites Verzögerungselement (48), welches zum Erfassen eines zweiten Entlade-Steuersignals ($V_{LS}$) eingerichtet ist, das eine Funktion des ersten Entlade-Steuersignals ($V_{LS}$') ist, und zu dessen Verzögern um einen Wert, der gleich dem dritten Zeitintervall ($T_D$) ist, eingerichtet ist, um ein verzögertes Entlade-Steuersignal ($V_{LS\_D}$) zu generieren, wobei die Leitungs-Steuerlogik (42) darüber hinaus eingerichtet ist zum Erfassen des verzögerten Lade-Steuersignals ($V_{HS\_D}$) und des verzögerten Entlade-Steuersignals ($V_{LS\_D}$), Detektieren, wenn einer von dem Ladeschalter (13) und dem Entladeschalter (14) von dem ersten Betriebszustand in den zweiten Betriebszustand wechselt, und Generieren eines entsprechenden Wechsels von dem zweiten Betriebszustand in den ersten Betriebszustand des anderen von dem Ladeschalter (13) und dem Entladeschalter (14).

10. Wandler nach einem der vorhergehenden Ansprüche, ferner umfassend eine erste Ansteuerschaltung (25) zum Ansteuern des Ladeschalters (13), wobei die erste Ansteuerschaltung (25) umfasst:

    - eine Ansteuereinrichtung (34) mit mehreren Wechselrichtern, die in Reihe geschaltet sind;
    - einen Bootstrap-Kondensator (29), der zum Speisen der Ansteuereinrichtung (34) mit einem ersten und einem zweiten Speiseeingang der Ansteuereinrichtung (34) gekoppelt ist;
    - einen Bootstrap-Schalter (30), der zwischen einen Speisekontakt (25a) und den ersten Speiseeingang der Ansteuereinrichtung (34) geschaltet und während des ersten Zeitintervalls (T$_{ON}$) zum Koppeln des Speisekontakts (25a) mit dem Bootstrap-Kondensator (29) und somit zum Laden des Bootstrap-Kondensators (29) und Speisen der Ansteuereinrichtung (34) betreibbar ist.

11. Energie-Sammlungs-System (200), das dazu angepasst ist, mehrere elektrische Lasten (20a-20n) zu speisen, umfassend:

- einen Energiewandler (2), der eingerichtet ist zum Wandeln von Energie, die von einer zu dem System (200) externen Energiequelle stammt, in ein elektrisches Wechselstromsignal;
- eine Gleichrichterschaltung (4), die eingerichtet ist zum Empfangen, als Eingang, des elektrischen Wechselstromsignals und zum Liefern, als Ausgang, eines Gleichstromausgangssignals;
- ein erstes Speicherelement (5), das mit der Gleichrichterschaltung (4) zum Empfangen, als Eingang, des Gleichstromausgangssignals gekoppelt ist und zum Speichern von elektrischer Energie eingerichtet ist; und
- einen Gleichstromwandler (10) nach einem der Ansprüche 1-10, welcher zwischen die Gleichrichterschaltung (4) und die elektrischen Lasten (20a-20n) geschaltet ist und zum Empfangen, als Eingang, des von der Gleichrichterschaltung (4) generierten Gleichstromausgangssignals und zum Speisen der elektrischen Lasten (20a-20n) eingerichtet ist.

12. Vorrichtung (300), welche das Energie-Sammlungs-System (200) nach Anspruch 11 umfasst.

13. Vorrichtung nach Anspruch 12, wobei es sich bei der Vorrichtung um ein Transportmittel oder Fußbekleidung handelt.

14. Verfahren zum Betreiben eines Gleichstromwandlers (10) zum unabhängigen Speisen mehrerer elektrischer Lasten (20a-20n), wobei der Gleichstromwandler umfasst:

- einen Ladeschalter (13) und einen Entladeschalter (14), die zwischen eine elektrische Energiequelle (12a), die dazu angepasst ist, ein Eingangsspeisesignal (V$_{IN}$) zu liefern, und einen Referenzkontakt (GND) in Reihe geschaltet sind;
- einen Induktor (18) mit einem ersten Leitungskontakt (18a) und einem zweiten Leitungskontakt (18b), wobei der erste Leitungskontakt (18a) des Induktors (18) zwischen den Ladeschalter (13) und den Entladeschalter (14) geschaltet ist; und
- mehrere Kopplungsschalter (22a-22n), von denen jeder zwischen den zweiten Leitungskontakt (18b) des Induktors (18) und eine jeweilige elektrische Last (20a; 20b; 20n) der mehreren elektrischen Lasten (20a-20n) geschaltet ist, um die jeweilige elektrische Last mit einem Ausgangsspeisesignal (V$_{out\_a}$-V$_{out\_n}$) zu speisen;

wobei das Verfahren die Schritte umfasst:

- Erfassen, für jede zu speisende elektrische Last, eines Signals, welches den Spannungswert (V$_L$) angibt, der zwischen dem ersten und dem zweiten Leitungskontakt (18a, 18b) des Induktors (18) gespeichert ist;
- Generieren, für jede zu speisende elektrische Last, eines ersten Zeitintervalls (T$_{ON}$), dessen Dauer mit dem an dem Induktor (18) anliegenden Spannungswert (V$_L$) variiert;
- während des ersten Zeitintervalls (T$_{ON}$), Steuern des Ladeschalters (13) dergestalt, dass er den ersten Leitungskontakt (18a) des Induktors (18) mit der elektrischen Energiequelle (12a) verbindet, um den Induktor (18) zu laden;
- Beenden des ersten Zeitintervalls (T$_{ON}$), wenn ein elektrischer Strom (I$_L$), der eine Funktion des Spannungswerts (V$_L$) ist und durch den Induktor (18) fließt, einen vordefinierten Spitzenstromwert (I$_{Lmax}$) erreicht; und
- während eines zweiten Zeitintervalls, das auf das erste Zeitintervall folgt, Steuern des Entladeschalters (14) dergestalt, dass er den ersten Leitungskontakt (18a) des Induktors (18) mit dem Referenzkontakt (GND) verbindet, um den Induktor (18) zu entladen.

15. Verfahren nach Anspruch 14, ferner umfassend die Schritte:

- für jede zu speisende elektrische Last, Vergleichen eines jeweiligen Ausgangsspeisesignals (V$_{out\_a}$-V$_{out\_n}$) mit einem jeweiligen Vergleichsreferenzsignal (V$_{ref\_c}$);
- Generieren eines jeweiligen, durch den Vergleich zwischen dem Ausgangsspeisesignal und dem Vergleichsreferenzsignal erhaltenen Ergebnissignals (V$_{comp\_a}$-V$_{comp\_n}$), wobei das Ergebnissignal die Notwendigkeit anzeigt, die jeweilige elektrische Last zu speisen; und
- Steuern eines Betriebs des Kopplungsschalters (22a-22n) auf Basis des Ergebnissignals (V$_{comp\_a}$-V$_{comp\_n}$).

**16.** Verfahren nach Anspruch 15, ferner umfassend die Schritte:

- Definieren mehrerer, aufeinanderfolgender Zeitintervalle ($\tau_1$-$\tau_n$);
- in jedem Zeitintervall, Verifizieren, ob eine jeweilige elektrische Last gespeist werden muss; und, falls dem so ist,
- Schließen eines jeweiligen Kopplungsschalters (22a-22n) und Offenhalten der übrigen Kopplungsschalter.

**17.** Verfahren nach einem der Ansprüche 14-16, umfassend den Schritt des Ladens des Induktors (18) während des ersten Zeitintervalls und Entladens des Induktors (18) während des zweiten Zeitintervalls gemäß einem diskontinuierlichen Leitungsmodus oder einem pseudokontinuierlichen Leitungsmodus.

**18.** Verfahren nach einem der Ansprüche 14-17, ferner umfassend die Schritte:

- Erfassen eines elektrischen Signals, das an dem ersten Leitungskontakt (18a) vorhanden ist;
- Erfassen eines elektrischen Signals, das an dem Referenzkontakt (GND) vorhanden ist;
- Vergleichen des elektrischen Signals, das an dem ersten Leitungskontakt (18a) vorhanden ist, mit dem elektrischen Signal, das an dem Referenzkontakt (GND) vorhanden ist;
- Generieren, basierend auf dem Vergleich, eines Nullstromsignals ($S_{zero}$), welches einen Nullstromzustand angibt, in welchem der Entladestrom, der von dem Induktor (18) durch den Entladeschalter (14) zu dem Referenzkontakt (GND) fließt, einen Wert einnimmt, der nahe bei dem Nullwert ist; und
- wenn der Nullstromzustand erreicht ist, Öffnen des Entladeschalters (14).

**19.** Verfahren nach Anspruch 18, wobei der Gleichstromwandler (10) ferner einen Anti-Oszillations-Schalter (58) umfasst, der parallel zu dem Induktor (18) geschaltet ist, wobei das Verfahren ferner den Schritt des Schließens des Anti-Oszillations-Schalters (58) umfasst, wenn der Entladestrom, der von dem Induktor (18) durch den Entladeschalter (14) zu dem Referenzkontakt (GND) fließt, den Wert nahe bei dem Nullwert erreicht.

**20.** Verfahren nach einem der Ansprüche 14-19, ferner umfassend den Schritt des Generierens eines dritten Zeitintervalls ($T_D$) zwischen dem ersten Zeitintervall und dem zweiten Zeitintervall.

**21.** Verfahren nach Anspruch 20, ferner umfassend die Schritte:

- Generieren eines ersten Lade-Steuersignals ($V_{HS}'$), welches dazu angepasst ist, den Ladeschalter (13) in einem ersten Betriebszustand und alternativ dazu in einem zweiten Betriebszustand zu steuern;
- Generieren eines ersten Entlade-Steuersignals ($V_{LS}'$), welches dazu angepasst ist, den Entladeschalter (14) in dem ersten Betriebszustand zu steuern, wenn der Ladeschalter (13) in dem zweiten Betriebszustand ist, und umgekehrt;
- Erfassen eines zweiten Lade-Steuersignals ($V_{HS}$), welches eine Funktion des ersten Lade-Steuersignals ($V_{HS}'$) ist;
- Verzögern des zweiten Lade-Steuersignals ($V_{HS}$) um einen Wert, der gleich dem dritten Zeitintervall ($T_D$) ist, um ein verzögertes Lade-Steuersignal ($V_{HS\_D}$) zu generieren;
- Erfassen eines zweiten Entlade-Steuersignals ($V_{LS}$), welches eine Funktion des ersten Entlade-Steuersignals ($V_{LS}'$) ist;
- Verzögern des zweiten Entlade-Steuersignals ($V_{LS}$) um einen Wert, der gleich dem dritten Zeitintervall ($T_D$) ist, um ein verzögertes Entlade-Steuersignal ($V_{LS\_D}$) zu generieren;
- Erfassen des verzögerten Lade-Steuersignals ($V_{HS\_D}$) und des verzögerten Entlade-Steuersignals ($V_{LS\_D}$);
- Detektieren, basierend auf dem verzögerten Lade-Steuersignal ($V_{HS\_D}$) oder dem verzögerten Entlade-Steuersignal ($V_{LS\_D}$), wenn einer von dem Ladeschalter (13) und dem Entladeschalter (14) von dem ersten Betriebszustand in den zweiten Betriebszustand wechselt; und
- Generieren eines Wechsels von dem zweiten Betriebszustand in den ersten Betriebszustand des anderen von dem Ladeschalter (13) und dem Entladeschalter (14).

**Revendications**

**1.** Convertisseur continu-continu (10) pour alimenter indépendamment une pluralité de charges électriques (20a-20n), comprenant :

- un interrupteur de charge (13) et un interrupteur de décharge (14), connectés en série l'un à l'autre entre une source d'énergie électrique (12a), adaptée pour fournir un signal d'alimentation d'entrée (VIN), et une borne de référence (GND) ;
- une bobine d'induction (18) ayant une première borne de conduction (18a) et une deuxième borne de conduction (18b), la première borne de conduction (18a) de la bobine d'induction (18) étant connectée entre l'interrupteur de charge (13) et l'interrupteur de décharge (14) ;
- une pluralité d'interrupteurs de couplage (22a-22n), chacun d'entre eux étant connecté entre la deuxième borne de conduction (18b) de la bobine d'induction (18) et une charge électrique respective (20a ; 20b ; 20n) de la pluralité de charges électriques (20a-20n) pour fournir à la charge électrique respective un signal d'alimentation de sortie ($V_{out\_a}$-$V_{out\_n}$) ; et
- un circuit de commande adaptative (70, 81), comprenant un moyen permettant d'acquérir, pour chaque charge électrique à alimenter, un signal représentant la valeur de tension ($V_L$) stockée entre les première et deuxième bornes de conduction (18a, 18b) de la bobine d'induction (18), et un moyen permettant de générer, pour chaque charge électrique à alimenter, un premier intervalle de temps ($T_{ON}$) dont la durée varie avec la valeur de tension ($V_L$) aux bornes de la bobine d'induction (18) de telle manière que le premier intervalle de temps ($T_{ON}$) se termine quand un courant électrique ($I_L$), qui est fonction de ladite valeur de tension ($V_L$) aux bornes de la bobine d'induction (18), traversant la bobine d'induction (18) atteint une valeur de courant de crête prédéfinie ($I_{Lmax}$),

dans lequel, pendant le premier intervalle de temps ($T_{ON}$), l'interrupteur de charge (13) est commandé de manière à connecter la première borne de conduction (18a) de la bobine d'induction (18) à la source d'énergie électrique (12a) afin de charger la bobine d'induction (18), et dans lequel, pendant un deuxième intervalle de temps consécutif au premier intervalle de temps, l'interrupteur de décharge (14) est commandé de manière à connecter la première borne de conduction (18a) de la bobine d'induction (18) à la borne de référence (GND) pour décharger la bobine d'induction (18).

**2.** Convertisseur selon la revendication 1, dans lequel le circuit de commande adaptative (70, 81) comprend un circuit opérationnel (72) comportant : une première borne d'entrée couplée à la source d'énergie électrique (12a) pour recevoir le signal d'alimentation d'entrée ($V_{IN}$) ; une deuxième borne d'entrée, pouvant être connectée à la charge électrique à alimenter, pour recevoir le signal d'alimentation de sortie respectif ($V_{out\_a}$-$V_{out\_n}$) ; et une borne de sortie configurée pour fournir un signal intermédiaire (Sin) proportionnel à la différence entre le signal d'alimentation d'entrée ($V_{IN}$) et le signal d'alimentation de sortie ($V_{out\_a}$-$V_{out\_n}$), ledit premier intervalle de temps ($T_{ON}$) étant inversement proportionnel audit signal intermédiaire ($S_{in}$).

**3.** Convertisseur selon la revendication 1 ou 2, comprenant en outre :

- une pluralité de circuits comparateurs (87a-87n), chacun d'entre eux étant configuré pour recevoir en entrée un signal d'alimentation de sortie respectif ($V_{out\_a}$-$V_{out\_n}$) et un signal de référence de comparaison respectif ($V_{ref\_c}$), et générer un signal de résultat respectif ($V_{comp\_a}$-$V_{comp\_n}$) obtenu à partir de la comparaison entre le signal d'alimentation de sortie et le signal de référence de comparaison, ledit signal de résultat étant représentatif de la nécessité d'alimenter la charge électrique respective ; et
- une logique de commande (85) configurée pour recevoir en entrée, pour chaque circuit comparateur, le signal de résultat ($V_{comp\_a}$-$V_{comp\_n}$) et pour commander le fonctionnement de l'interrupteur de couplage (22a-22n) d'après le signal de résultat ($V_{comp\_a}$-$V_{comp\_n}$).

**4.** Convertisseur selon la revendication 3, dans lequel la logique de commande (85) comprend en outre un moyen de traitement, configuré pour définir une pluralité d'intervalles de temps ($\tau_1$-$\tau_n$) qui se suivent, chaque interrupteur de couplage (22a-22n) étant fermé pendant un intervalle de temps respectif de ladite pluralité d'intervalles de temps ($\tau_1$-$\tau_n$) et ouvert pendant les intervalles de temps restants, selon une technique de commande par multiplexage dans le temps.

**5.** Convertisseur selon l'une quelconque des revendications précédentes, dans lequel la bobine d'induction (18) se charge pendant le premier intervalle de temps et se décharge pendant le deuxième intervalle de temps, selon un mode de conduction de type discontinu, ou selon un mode de conduction de type pseudo-continu.

**6.** Convertisseur selon l'une quelconque des revendications précédentes, comprenant en outre :

- un comparateur (53) couplé à la première borne de conduction (18a) de la bobine d'induction (18) pour recevoir un signal électrique présent à la première borne de conduction (18a), et à la borne de référence (GND) pour recevoir un signal électrique présent à la borne de référence (GND), et configuré pour générer en sortie, d'après une comparaison entre le signal électrique à la première borne de conduction (18a) et le signal électrique à la borne de référence (GND), un signal de courant nul ($S_{zero}$) ; et

- un circuit de pilotage de décharge (54, 35), configuré pour recevoir en entrée le signal de courant nul ($S_{zero}$) et, d'après le signal de courant nul ($S_{zero}$), détecter, pendant le deuxième intervalle de temps, un état de courant nul dans lequel le courant de décharge qui circule de la bobine d'induction (18) à la borne de référence (GND), à travers l'interrupteur de décharge (14), atteint une valeur proche de la valeur zéro, et, quand l'état de courant nul est atteint, ouvrir l'interrupteur de décharge (14).

7. Convertisseur selon la revendication 6, comprenant en outre un interrupteur anti-oscillation (58), monté en parallèle à la bobine d'induction (18), le circuit de pilotage de décharge (54, 35) étant configuré pour fermer l'interrupteur anti-oscillation (58) quand le courant de décharge qui circule de la bobine d'induction (18) à la borne de référence (GND), à travers l'interrupteur de décharge (14), atteint ladite valeur proche de la valeur zéro.

8. Convertisseur selon l'une quelconque des revendications précédentes, comprenant en outre un circuit pour la génération de temps morts (40), configuré pour générer un troisième intervalle de temps ($T_D$) entre le premier intervalle de temps et le deuxième intervalle de temps.

9. Convertisseur selon la revendication 8, dans lequel le circuit pour la génération de temps morts (40) comprend :

- une logique de commande de conduction (42), configurée pour générer un premier signal de commande de charge ($V_{HS}$'), adapté pour commander l'interrupteur de charge (13) dans un premier état de fonctionnement et, alternativement, dans un deuxième état de fonctionnement, et pour générer un premier signal de commande de décharge ($V_{LS}$'), adapté pour commander l'interrupteur de décharge (14) dans le premier état de fonctionnement quand l'interrupteur de charge (13) est dans le deuxième état de fonctionnement, et vice versa ;
- un premier élément de retard (46), configuré pour acquérir un deuxième signal de commande de charge ($V_{HS}$), qui est fonction du premier signal de commande de charge ($V_{HS}$'), et pour le retarder d'une valeur égale au troisième intervalle de temps ($T_D$) afin de générer un signal de commande de charge retardé ($V_{HS\_D}$) ;
- un deuxième élément de retard (48), configuré pour acquérir un deuxième signal de commande de décharge ($V_{LS}$), qui est fonction du premier signal de commande de décharge ($V_{LS}$'), et pour le retarder d'une valeur égale au troisième intervalle de temps ($T_D$) afin de générer un signal de commande de décharge retardé ($V_{LS\_D}$), la logique de commande de conduction (42) étant de plus configurée pour acquérir le signal de commande de charge retardé ($V_{HS\_D}$) et le signal de commande de décharge retardé ($V_{LS\_D}$), détecter une variation du premier état de fonctionnement au deuxième état de fonctionnement d'un élément parmi l'interrupteur de charge (13) et l'interrupteur de décharge (14), et générer une variation correspondante du deuxième état de fonctionnement au premier état de fonctionnement de l'autre élément parmi l'interrupteur de charge (13) et l'interrupteur de décharge (14).

10. Convertisseur selon l'une quelconque des revendications précédentes, comprenant en outre un premier circuit de pilotage (25) pour piloter l'interrupteur de charge (13), le premier circuit de pilotage (25) comprenant :

- un dispositif de pilotage (34), comportant une pluralité d'inverseurs montés en série entre eux ;
- un condensateur autoélévateur (29), couplé à une première et une deuxième entrée d'alimentation du dispositif de pilotage (34) pour alimenter le dispositif de pilotage (34) ;
- un interrupteur d'autoélévation (30), connecté entre une borne d'alimentation (25a) et la première entrée d'alimentation du dispositif de pilotage (34), et utilisable pendant le premier intervalle de temps ($T_{ON}$) pour coupler la borne d'alimentation (25a) au condensateur autoélévateur (29), afin de charger le condensateur autoélévateur (29) et d'alimenter le dispositif de pilotage (34).

11. Système de récupération d'énergie (200), adapté pour alimenter une pluralité de charges électriques (20a-20n), comprenant :

- un transducteur (2), configuré pour convertir de l'énergie provenant d'une source d'énergie qui est externe audit système (200) en un signal électrique alternatif ;
- un circuit redresseur (4), configuré pour recevoir en entrée le signal électrique alternatif et pour fournir en sortie un signal de sortie continu ;
- un premier élément de stockage (5), qui est couplé au circuit redresseur (4) pour recevoir en entrée le signal de sortie continu, et qui est configuré pour stocker de l'énergie électrique ; et
- un convertisseur continu-continu (10) selon l'une quelconque des revendications 1 à 10, qui est connecté entre le circuit redresseur (4) et les charges électriques (20a-20n), et qui est configuré pour recevoir en entrée le signal de sortie continu généré par le circuit redresseur (4) et alimenter les charges électriques (20a-20n).

12. Appareil (300) comprenant le système de récupération d'énergie (200) selon la revendication 11.

13. Appareil selon la revendication 12, dans lequel ledit appareil est un moyen de transport ou une chaussure.

14. Procédé de mise en oeuvre d'un convertisseur continu-continu (10) pour alimenter indépendamment une pluralité de charges électriques (20a-20n), le convertisseur continu-continu comprenant :

- un interrupteur de charge (13) et un interrupteur de décharge (14), connectés en série l'un à l'autre entre une source d'énergie électrique (12a), adaptée pour fournir un signal d'alimentation d'entrée ($V_{IN}$), et une borne de référence (GND) ;
- une bobine d'induction (18) ayant une première borne de conduction (18a) et une deuxième borne de conduction (18b), la première borne de conduction (18a) de la bobine d'induction (18) étant connectée entre l'interrupteur de charge (13) et l'interrupteur de décharge (14) ; et
- une pluralité d'interrupteurs de couplage (22a-22n), chacun d'entre eux étant connecté entre la deuxième borne de conduction (18b) de la bobine d'induction (18) et une charge électrique respective (20a ; 20b ; 20n) de la pluralité de charges électriques (20a-20n) pour fournir à la charge électrique respective un signal d'alimentation de sortie ($V_{out\_a}$-$V_{out\_n}$),

le procédé comprenant les étapes suivantes :

- acquérir, pour chaque charge électrique à alimenter, un signal représentant la valeur de tension ($V_L$) stockée entre les première et deuxième bornes de conduction (18a, 18b) de la bobine d'induction (18) ;
- générer, pour chaque charge électrique à alimenter, un premier intervalle de temps ($T_{ON}$) dont la durée varie avec le signal représentant la valeur de tension ($V_L$) détectée aux bornes de la bobine d'induction (18) ;
- pendant le premier intervalle de temps ($T_{ON}$), commander l'interrupteur de charge (13) de manière à connecter la première borne de conduction (18a) de la bobine d'induction (18) à la source d'énergie électrique (12a) afin de charger la bobine d'induction (18) ;
- arrêter le premier intervalle de temps ($T_{ON}$) au moment où un courant électrique ($I_L$), qui est fonction de ladite valeur de tension ($V_L$), traversant la bobine d'induction (18) atteint une valeur de courant de crête prédéfinie ($I_{Lmax}$) ; et
- pendant un deuxième intervalle de temps consécutif au premier intervalle de temps, commander l'interrupteur de décharge (14) de manière à connecter la première borne de conduction (18a) de la bobine d'induction (18) à la borne de référence (GND) pour décharger la bobine d'induction (18).

15. Procédé selon la revendication 14, comprenant en outre les étapes suivantes :

- pour chaque charge électrique à alimenter, comparer un signal d'alimentation de sortie respectif ($V_{out\_a}$-$V_{out\_n}$) à un signal de référence de comparaison respectif ($V_{ref\_c}$) ;
- générer un signal de résultat respectif ($V_{comp\_a}$-$V_{comp\_n}$) obtenu à partir de la comparaison entre le signal d'alimentation de sortie et le signal de référence de comparaison, ledit signal de résultat étant représentatif de la nécessité d'alimenter la charge électrique respective ; et
- commander le fonctionnement de l'interrupteur de couplage (22a-22n) d'après le signal de résultat ($V_{comp\_a}$-$V_{comp\_n}$).

16. Procédé selon la revendication 15, comprenant en outre les étapes suivantes :

- définir une pluralité d'intervalles de temps ($\tau_1$-$\tau_n$) qui se suivent ;
- dans chaque intervalle de temps, vérifier si une charge électrique respective nécessite d'être alimentée ; et, si oui,
- fermer un interrupteur de couplage respectif (22a-22n) et maintenir les interrupteurs de couplage restants ouverts.

17. Procédé selon l'une quelconque des revendications 14 à 16, comprenant l'étape consistant à charger la bobine d'induction (18) pendant le premier intervalle de temps et à décharger la bobine d'induction (18) pendant le deuxième intervalle de temps, selon un mode de conduction de type discontinu ou selon un mode de conduction de type pseudo-continu.

18. Procédé selon l'une quelconque des revendications 14 à 17, comprenant en outre les étapes suivantes :

- acquérir un signal électrique présent sur la première borne de conduction (18a) ;
- acquérir un signal électrique présent sur la borne de référence (GND) ;
- comparer le signal électrique présent sur la première borne de conduction (18a) au signal électrique présent sur la borne de référence (GND) ;
- générer, d'après ladite comparaison, un signal de courant nul ($S_{zero}$) indiquant un état de courant nul dans lequel le courant de décharge qui circule de la bobine d'induction (18) à la borne de référence (GND), à travers l'interrupteur de décharge (14), prend une valeur proche de la valeur zéro ; et
- quand l'état de courant nul est atteint, ouvrir l'interrupteur de décharge (14).

19. Procédé selon la revendication 18, dans lequel le convertisseur continu-continu (10) comprend en outre un interrupteur anti-oscillation (58), monté en parallèle à la bobine d'induction (18), le procédé comprenant en outre l'étape consistant à fermer l'interrupteur anti-oscillation (58) quand le courant de décharge qui circule de la bobine d'induction (18) à la borne de référence (GND), à travers l'interrupteur de décharge (14), atteint ladite valeur proche de la valeur zéro.

20. Procédé selon l'une quelconque des revendications 14 à 19, comprenant en outre l'étape consistant à générer un troisième intervalle de temps ($T_D$) entre le premier intervalle de temps et le deuxième intervalle de temps.

21. Procédé selon la revendication 20, comprenant les étapes suivantes :

- générer un premier signal de commande de charge ($V_{HS}'$), adapté pour commander l'interrupteur de charge (13) dans un premier état de fonctionnement et, alternativement, dans un deuxième état de fonctionnement ;
- générer un premier signal de commande de décharge ($V_{LS}'$), adapté pour commander l'interrupteur de décharge (14) dans le premier état de fonctionnement quand l'interrupteur de charge (13) est dans le deuxième état de fonctionnement, et vice versa ;
- acquérir un deuxième signal de commande de charge ($V_{HS}$), qui est fonction du premier signal de commande de charge ($V_{HS}'$) ;
- retarder le deuxième signal de commande de charge ($V_{HS}$) d'une valeur égale au troisième intervalle de temps ($T_D$) afin de générer un signal de commande de charge retardé ($V_{HS\_D}$) ;
- acquérir un deuxième signal de commande de décharge ($V_{LS}$), qui est fonction du premier signal de commande de décharge ($V_{LS}'$) ;
- retarder le deuxième signal de commande de décharge ($V_{LS}$) d'une valeur égale au troisième intervalle de temps ($T_D$) afin de générer un signal de commande de décharge retardé ($V_{LS\_D}$) ;
- acquérir le signal de commande de charge retardé ($V_{HS\_D}$) et le signal de commande de décharge retardé ($V_{LS\_D}$) ;
- détecter, d'après le signal de commande de charge retardé ($V_{HS\_D}$) ou le signal de commande de décharge retardé ($V_{LS\_D}$), une variation du premier état de fonctionnement au deuxième état de fonctionnement d'un élément parmi l'interrupteur de charge (13) et l'interrupteur de décharge (14) ; et
- générer une variation du deuxième état de fonctionnement au premier état de fonctionnement de l'autre élément parmi l'interrupteur de charge (13) et l'interrupteur de décharge (14).

Fig.1

Fig.2

Fig.3

Fig.4a

Fig.4b

Fig.4c

Fig.5a

Fig.5b

Fig.6

Fig.7a

Fig.7b

Fig.7c

Fig.8

**Fig. 9**

**Fig.12**

Fig.10a

Fig.10b

Fig.10c

Fig.10d

Fig. 11

EP 2 518 878 B1

Fig.13

81

80

$V_{DD}$

G

S

82

D

$S_{in} = M \cdot i_{IN}$

85

S

G

93

D

96

81'

G

D

95

$C_{ON}, 97$

81''

S

GND

GND

Fig.14

Fig.15

Fig.16a

Fig.16b

Fig.16c

Fig.16d

Fig.16e

Fig.16f

Fig.17

TRASNSDUCER 2

$P_{TRANSD}^{max}$

SCAVENGING INTERFACE 4

$P_{SCAV}$

$V_{IN}$

5

DC-DC CONVERTER 10

$P_{LOAD}$

8

200

Fig.18

EP 2 518 878 B1

300

20a

20b

2

10

200

250

Fig.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. KWON.** Single-Inductor-Multiple-Output Switching DC-DC Converters. *IEEE Transactions on circuits and systems,* 08 August 2009
- **D. MA.** A pseudo-CCM/DCM Switching Converter With Freewheel Swichting. *IEE Journal of solid-state Circuits,* 06 June 2003
- **M. BELLONI.** On the design of Single-Inductor Multiple -Output DC-DC Buck Converters. *International Symposium on circuits and Systems,* 2008